# EUROPEAN PATENT APPLICATION

(11) **EP 4 794 409 A1**
(43) Date of publication of application: **19.08.2026**
(21) Application number: 24884748.5
(22) Date of filing: 29.10.2024
(51) Int. Cl.: H04W 56/00

(54) **COMMUNICATION METHOD, APPARATUS, AND SYSTEM, AND STORAGE MEDIUM**

(30) Priority: 31.10.2023 CN 202311441113
(71) Applicant: HUAWEI TECHNOLOGIES CO., LTD., Shenzhen 518129 (CN)
(72) Inventor: ZHU, Huiying, Shenzhen, Guangdong 518129 (CN); DONG, Pengpeng, Shenzhen, Guangdong 518129 (CN); WU, Fangzhou, Shenzhen, Guangdong 518129 (CN); SHI, Meng, Shenzhen, Guangdong 518129 (CN)
(74) Representative: Isarpatent
(86) International application number: PCT/CN2024/128199
(87) International publication number: WO 2025/092745

(57) **Abstract**

A communication method, apparatus, and system, and a storage medium are provided. A first resource position for a first node to send a first signal and a second resource position for a second node to send a second signal are time division multiplexed and/or frequency division multiplexed, the first resource position is associated with an identifier of the first node, and the second resource position is associated with an identifier of the second node, so that quick measurement of a plurality of nodes can be implemented and interference between signals can be avoided. This solution may be applied to scenarios such as an ad hoc network and a communication emergency network.

## Description

This application claims priority to Chinese Patent Application No. 202311441113.0, filed with the China National Intellectual Property Administration on October 31, 2023 and entitled "COMMUNICATION METHOD, APPARATUS, AND SYSTEM, AND STORAGE MEDIUM", which is incorporated herein by reference in its entirety.

### TECHNICAL FIELD

This application relates to the field of communication technologies, and in particular, to a communication method, apparatus, and system, and a storage medium.

### BACKGROUND

A synchronization signal/physical broadcast channel block (synchronization signal/PBCH block, SS/PBCH block) is one of pilot signals designed and used in a 5th generation (5^{th} generation, 5G) mobile communication technology. A terminal device synchronizes with a cell by using an SS/PBCH block to complete a cell search operation. In addition, during mobility management such as handover, reselection, or redirection, measurement performed by the terminal device on an SS/PBCH block is also crucial.

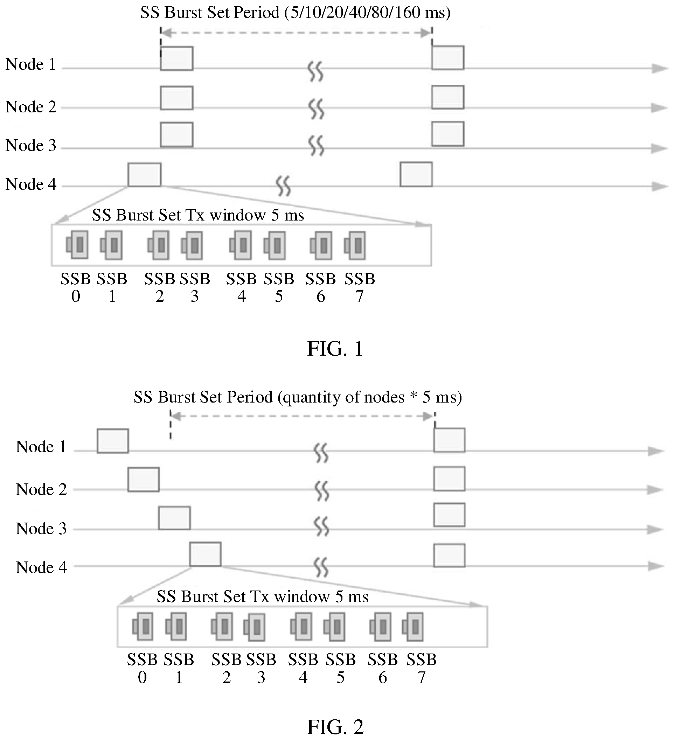

Each of a plurality of nodes may periodically send a plurality of SS/PBCH blocks (the plurality of SS/PBCH blocks may be referred to as a synchronization signal/physical broadcast channel block burst set (SS/PBCH block burst set, SS Burst Set)) within 5 ms. FIG. 1 is a diagram of sending SS/PBCH blocks by a plurality of existing nodes in a non-orthogonal manner. A node 1, a node 2, and a node 3 send SS/PBCH blocks on a same time domain resource, and there is a problem of measurement interference or unachievable mutual measurement.

SS/PBCH blocks may be sent in an orthogonal manner at a granularity of a minimum unit of 5 ms, to avoid measurement interference. FIG. 2 is a diagram of sending SS/PBCH blocks by a plurality of existing nodes in an orthogonal manner. Actually, a node in a network may be an omnidirectional antenna, and sends only one SS/PBCH block in one period, but the SS/PBCH block is still sent in a time division orthogonal manner at the granularity of 5 ms. If mutual measurement between hundreds of nodes is supported or cell search is not subject to interference from an SS/PBCH block in a neighboring cell, a measurement delay is long, and reaches a delay of hundreds of milliseconds.

In view of this, how to quickly measure an SS/PBCH block by a plurality of nodes and avoid interference is an urgent problem to be resolved.

### SUMMARY

This application provides a communication method, apparatus, and system, and a storage medium, to quickly measure a first signal by a plurality of nodes and avoid interference.

According to a first aspect, a communication method is provided, and is performed by a first node or a chip or a circuit used in the first node. The method includes: determining a first resource position for the first node to send a first signal, where the first resource position and a second resource position are time division multiplexed and/or frequency division multiplexed, the second resource position is used by a second node to send a second signal, the first resource position is associated with an identifier of the first node, and the second resource position is associated with an identifier of the second node; and sending the first signal at the first resource position. In this aspect, the first resource position for the first node to send the first signal and the second resource position for the second node to send the second signal are time division multiplexed and/or frequency division multiplexed, the first resource position is associated with the identifier of the first node, and the second resource position is associated with the identifier of the second node, so that fast measurement of a plurality of nodes can be implemented and interference between signals can be avoided.

For example, the first resource position and the second resource position are located in a half frame.

In a possible implementation, the first resource position for the first node to send the first signal and the second resource position for the second node to send the second signal are frequency division multiplexed; and the method further includes: sending a third signal at a third resource position, where the third signal is used by the first node and the second node to measure each other, the third resource position and a fourth resource position are time division multiplexed, the fourth resource position is used by the second node to send a fourth signal, the third resource position is associated with the identifier of the first node, and the fourth resource position is associated with the identifier of the second node. In this implementation, a plurality of nodes send signals in a time division orthogonal manner for mutual measurement between the nodes, so that signal interference from a neighboring cell can be avoided during signal measurement, and a delay of multi-node measurement can be reduced.

The method in the first aspect may be performed by the first node, or may be performed by a module (for example, a processor, a chip, or a chip system) used in the first node, or may be implemented by a logical node, a logical module, or software that can implement all or some functions of the first node.

In a possible implementation, the second resource position and the first resource position are time division multiplexed, and the method further includes:
receiving the second signal at the second resource position.

According to a second aspect, a communication method is provided, and is performed by a second node or a chip or a circuit used in the second node. The method includes: determining a second resource position for the second node to send a second signal, where the second resource position and a first resource position are time division multiplexed, the first resource position is used by a first node to send a first signal, the first resource position and the second resource position are located in a half frame, the first resource position is associated with an identifier of the first node, and the second resource position is associated with an identifier of the second node; receiving the first signal at the first resource position; and sending the second signal at the second resource position. In this aspect, the second resource position for the second node to send the second signal and the first resource position for the first node to send the first signal are time division multiplexed, the first resource position is associated with the identifier of the first node, and the second resource position is associated with the identifier of the second node, so that fast measurement of a plurality of nodes can be implemented and interference between signals can be avoided.

According to a third aspect, a communication method is provided, and is performed by a second node or a chip or a circuit used in the second node. The method includes: determining a second resource position for the second node to send a second signal, where the second resource position and a first resource position are frequency division multiplexed, the first resource position is used by a first node to send a first signal, the first resource position is associated with an identifier of the first node, and the second resource position is associated with an identifier of the second node; and sending the second signal at the second resource position. In this aspect, the second resource position for the second node to send the second signal and the first resource position for the first node to send the first signal are frequency division multiplexed, the first resource position is associated with the identifier of the first node, and the second resource position is associated with the identifier of the second node, so that fast measurement of a plurality of nodes can be implemented and interference between signals can be avoided.

The methods in the second aspect and the third aspect may be performed by the second node, or may be performed by a module (for example, a processor, a chip, or a chip system) used in the second node, or may be implemented by a logical node, a logical module, or software that can implement all or some functions of the second node.

With reference to the first aspect to the third aspect, in another possible implementation, the first resource position is further time division multiplexed and/or frequency division multiplexed with an x^{th} resource position, the x^{th} resource position is used by an x^{th} node to send a third signal, the x^{th} resource position is associated with an identifier of the x^{th} node, and x is a natural number. In this implementation, the first resource position for the first node to send the first signal and the x^{th} resource position for the x^{th} node to send an x^{th} signal are time division multiplexed and/or frequency division multiplexed, the first resource position is associated with the identifier of the first node, and the x^{th} resource position is associated with the identifier of the x^{th} node, so that fast measurement of a plurality of nodes can be implemented and interference between signals can be avoided. A node may autonomously determine a resource position for sending the first signal, without configuration by a network side device, or without coordination with another node, so that signaling overheads can be reduced.

With reference to any one of the first aspect to the third aspect or the implementations of the first aspect to the third aspect, in another possible implementation, the first resource position is associated with an offset of the half frame in which the first resource position is located in a period of the first signal and an index of the first signal in the half frame, and the period includes at least one half frame.

With reference to any one of the first aspect to the third aspect or the implementations of the first aspect to the third aspect, in another possible implementation, the first resource position and the second resource position are time division multiplexed, and the offset of the half frame in which the first resource position is located in the period of the first signal is associated with the identifier of the first node and a quantity of candidate positions of the first signal in the half frame; and the index of the first signal in the half frame is associated with the identifier of the first node and the quantity of candidate positions of the first signal in the half frame. In this implementation, resource positions of a plurality of nodes are time division multiplexed, signals sent by different nodes are orthogonal through time division, time domain resource positions of signals are associated with identifiers of the nodes, and a node may autonomously determine, by using an identifier of the node, a resource position for sending the first signal, without configuration by a network side device, or without coordination with another node, thereby reducing signaling overheads and avoiding signal interference from an adjacent node during signal measurement. In addition, the plurality of nodes may perform time division multiplexing to reduce measurement delays of the plurality of nodes.

With reference to any one of the first aspect to the third aspect or the implementations of the first aspect to the third aspect, in another possible implementation, the offset of the half frame in which the first resource position is located in the period of the first signal, the identifier of the first node, and the quantity of candidate positions of the first signal in the half frame satisfy a first function relationship; and the index of the first signal in the half frame, the identifier of the first node, and the quantity of candidate positions of the first signal in the half frame satisfy a second function relationship.

With reference to any one of the first aspect to the third aspect or the implementations of the first aspect to the third aspect, in another possible implementation, the offset of the half frame in which the first resource position is located in the period of the first signal is equal to $\left⌊identifier of the first node/{L}_{max}\right⌋$ or $\left⌊\left(identifier of the first node+m\right)/{L}_{max}\right⌋$, where *Lₘₐₓ* is the quantity of candidate positions of the first signal in the half frame, / represents division, and └ ┘ represents rounding down; and the index of the first signal in the half frame is equal to identifier of the first node%*Lₘₐₓ* or (identifier of the first node+m)%*Lₘₐₓ*, where % represents a modulo operation. m is a natural number or an integer.

With reference to any one of the first aspect to the third aspect or the implementations of the first aspect to the third aspect, in another possible implementation, the quantity of candidate positions of the first signal in the half frame is associated with at least one of a carrier frequency and a subcarrier spacing.

With reference to any one of the first aspect to the third aspect or the implementations of the first aspect to the third aspect, in another possible implementation, an index of a first symbol in the candidate position of the first signal in the half frame is at least one of the following indexes: {2, 6, 10}+14*n, where when a subcarrier spacing corresponding to the first signal is 15 kHz, n=0, 1, 2, 3, 4; when a subcarrier spacing corresponding to the first signal is 30 kHz, n=0, 1, 2, 3, 4, 5, 6, 7, 8, 9; when a subcarrier spacing corresponding to the first signal is 60 kHz, n=0, 1, 2, 3, 4, 5, 6, 7, 8, 9, 10, 11, 12, 13, 14, 15, 16, 17, 18, 19; when a subcarrier spacing corresponding to the first signal is 120 kHz, n=0, 1, 2, 3, 4, ..., 39; when a subcarrier spacing corresponding to the first signal is 240 kHz, n=0, 1, 2, 3, 4, ..., 79; when a subcarrier spacing corresponding to the first signal is 480 kHz, n=0, 1, 2, 3, 4, ..., 159; or when a subcarrier spacing corresponding to the first signal is 960 kHz, n=0, 1, 2, 3, 4, ..., 319.

With reference to any one of the first aspect to the third aspect or the implementations of the first aspect to the third aspect, in another possible implementation, an index of a first symbol in the candidate position of the first signal in the half frame is at least one of the following indexes: {4}+4*n, where when a subcarrier spacing corresponding to the first signal is 15 kHz, n=0, 1, 2, 3, 4, ..., 15; when a subcarrier spacing corresponding to the first signal is 30 kHz, n=0, 1, 2, 3, 4, ..., 33; when a subcarrier spacing corresponding to the first signal is 60 kHz, n=0, 1, 2, 3, 4, ..., 68; when a subcarrier spacing corresponding to the first signal is 120 kHz, n=0, 1, 2, 3, 4, ..., 138; when a subcarrier spacing corresponding to the first signal is 240 kHz, n=0, 1, 2, 3, 4, ..., 278; when a subcarrier spacing corresponding to the first signal is 480 kHz, n=0, 1, 2, 3, 4, ..., 558; or when a subcarrier spacing corresponding to the first signal is 960 kHz, n=0, 1, 2, 3, 4, ..., 1118.

With reference to any one of the first aspect to the third aspect or the implementations of the first aspect to the third aspect, in another possible implementation, an index of a first symbol in the candidate position of the first signal in the half frame is at least one of the following indexes: {2}+4*n, where when a subcarrier spacing corresponding to the first signal is 15 kHz, n=0, 1, 2, 3, 4, ..., 16; when a subcarrier spacing corresponding to the first signal is 30 kHz, n=0, 1, 2, 3, 4, ..., 33; when a subcarrier spacing corresponding to the first signal is 60 kHz, n=0, 1, 2, 3, 4, ..., 68; when a subcarrier spacing corresponding to the first signal is 120 kHz, n=0, 1, 2, 3, 4, ..., 138; when a subcarrier spacing corresponding to the first signal is 240 kHz, n=0, 1, 2, 3, 4, ..., 278; when a subcarrier spacing corresponding to the first signal is 480 kHz, n=0, 1, 2, 3, 4, ..., 558; or when a subcarrier spacing corresponding to the first signal is 960 kHz, n=0, 1, 2, 3, 4, ..., 1118.

With reference to any one of the first aspect to the third aspect or the implementations of the first aspect to the third aspect, in another possible implementation, the first resource position and the second resource position are frequency division multiplexed, and an offset of the half frame in which the first resource position is located in a period of the first signal is associated with the identifier of the first node, a first parameter, a second parameter, a quantity of times that the currently sent first signal has been repeatedly sent in the period, and a quantity of candidate positions of the first signal in the half frame; and an index of the first signal in the half frame is associated with the identifier of the first node, the first parameter, the second parameter, the quantity of times that the currently sent first signal has been repeatedly sent in the period, and the quantity of candidate positions of the first signal in the half frame, where the first parameter is predefined, or is configured, or is based on a predefined or configured third parameter; and the second parameter is predefined, or is configured, or is based on a predefined or configured fourth parameter. In this implementation, the first resource position for the first node to send the first signal and the second resource position for the second node to send the second signal are frequency division multiplexed, the first resource position is associated with the identifier of the first node, and the second resource position is associated with the identifier of the second node, so that fast measurement of a plurality of nodes can be implemented and interference between signals can be avoided. Optionally, the third parameter is a largest value in preconfigured physical cell identifiers. Optionally, the fourth parameter is a preconfigured system bandwidth.

With reference to any one of the first aspect to the third aspect or the implementations of the first aspect to the third aspect, in another possible implementation, the offset of the half frame in which the first resource position is located in the period of the first signal, the identifier of the first node, the first parameter, the second parameter, the quantity of times that the currently sent first signal has been repeatedly sent in the period, and the quantity of candidate positions of the first signal in the half frame satisfy a third function relationship; and the index of the first signal in the half frame, the identifier of the first node, the first parameter, the second parameter, the quantity of times that the currently sent first signal has been repeatedly sent in the period, and the quantity of candidate positions of the first signal in the half frame satisfy a fourth function relationship.

With reference to any one of the first aspect to the third aspect or the implementations of the first aspect to the third aspect, in another possible implementation, the offset of the half frame in which the first resource position is located in the period of the first signal is equal to $\left[\left(identifier of the first node+r-1\right){%N}_{cell}+\left(r-1\right)\times \left⌈{N}_{cell}/{N}_{f , cell}\right⌉\times {N}_{f , cell}\right] /$ $\left({N}_{f , cell}\times {L}_{max}\right)$ or $\left[\left(identifier of the first node+m+r-1\right){%N}_{cell}+\left(r-\right.\right.$ $\left.\left.1\right)\times \left⌈{N}_{cell}/{N}_{f , cell}\right⌉\times {N}_{f , cell}\right] / \left({N}_{f , cell}\times {L}_{max}\right)$; and the index of the first signal in the half frame is equal to $\left[\left(identifier of the first node+r-1\right){%N}_{cell}+\left(r-1\right)\times \right.$ $\left.\left⌈{N}_{cell}/{N}_{f , cell}\right⌉\times {N}_{f , cell}/{N}_{f , cell}\right] {%L}_{max}$ or $\left[\left(identifier of the first node+m+r-\right.\right.$ $\left.\left.1\right){%N}_{cell}+\left(r-1\right)\times \left⌈{N}_{cell}/{N}_{f , cell}\right⌉\times {N}_{f , cell}\right] / {N}_{f , cell} {%L}_{max}$*,* where r is the quantity of times that the currently sent first signal has been repeatedly sent in the period, *N_{cell}* is a total quantity of nodes performing mutual measurement, *N_{f,cell}* is a quantity of nodes that support orthogonality in frequency domain, *Lₘₐₓ* is the quantity of candidate positions of the first signal in the half frame, m is a natural number or an integer, / represents division, └ ┘ represents rounding down, ┌ ┐ represents rounding up, and % represents a modulo operation.

With reference to any one of the first aspect to the third aspect or the implementations of the first aspect to the third aspect, in another possible implementation, in different half frames in the period, at least one different second node exists in a plurality of second nodes that perform frequency division multiplexing with the first node.

With reference to any one of the first aspect to the third aspect or the implementations of the first aspect to the third aspect, in another possible implementation, the first signal is used for cell search. In this implementation, a signal is sent in a frequency division orthogonal manner between a plurality of nodes for cell search, thereby improving resource utilization.

In a possible implementation, the first resource position for the first node to send the first signal and the second resource position for the second node to send the second signal are frequency division multiplexed; and the method further includes: sending a third signal at a third resource position, where the third signal is used by the first node and the second node to measure each other, the third resource position and a fourth resource position are time division multiplexed, the fourth resource position is used by the second node to send a fourth signal, the third resource position is associated with the identifier of the first node, and the fourth resource position is associated with the identifier of the second node. In this implementation, a plurality of nodes send signals in a time division orthogonal manner for mutual measurement between the nodes, so that signal interference from a neighboring cell can be avoided during signal measurement, and a delay of multi-node measurement can be reduced.

For an SS/PBCH block used for cell search, that is, an SSB, a half frame offset of the SSB may be based on an identifier of a node, a quantity *N_{f,cell}* of nodes supporting orthogonality in frequency domain, and a quantity *L*₁ of SSBs used for cell search in each half frame, that is, may be associated with the identifier of the node, the quantity *N_{f,cell}* of nodes supporting orthogonality in frequency domain, and the quantity *L*₁ of SSBs used for cell search in each half frame, or may be a function of the identifier of the node, the quantity *N_{f,cell}* of nodes supporting orthogonality in frequency domain, and the quantity *L*₁ of SSBs used for cell search in each half frame. For example, the half frame offset of the SSB may be expressed as $\left⌊PCI/\left({N}_{f , cell}\times {L}_{1}\right)\right⌋$. An SSB index may be based on the identifier of the node, the quantity *N_{f,cell}* of nodes supporting orthogonality in frequency domain, and the quantity *L*₁ of SSBs used for cell search in each half frame, that is, may be associated with the identifier of the node, the quantity *N_{f,cell}* of nodes supporting orthogonality in frequency domain, and the quantity *L*₁ of SSBs used for cell search in each half frame, or may be a function of the identifier of the node, the quantity *N_{f,cell}* of nodes supporting orthogonality in frequency domain, and the quantity *L*₁ of SSBs used for cell search in each half frame. For example, the SSB index may be expressed as $\left⌊PCI%\left({N}_{f , cell}\times {L}_{1}\right)/{N}_{f , cell}\right⌋ \times 2$ . A center frequency position of the SSB may be based on a cell identifier, for example, may be expressed as PCI%*N*_{*f*,*cell*}.

For an SSB used for mutual measurement between nodes, a half frame offset of the SSB may be based on an identifier of a node, a quantity *L*₁ of SSBs used for cell search in each half frame, and a quantity *Lₘₐₓ* of candidate SSBs in each half frame, that is, may be associated with the identifier of the node, the quantity *L*₁ of SSBs used for cell search in each half frame, and the quantity *Lₘₐₓ* of candidate SSBs in each half frame, or may be a function of the identifier of the node, the quantity *L*₁ of SSBs used for cell search in each half frame, and the quantity *Lₘₐₓ* of candidate SSBs in each half frame. For example, the half frame offset of the SSB may be expressed as $\left⌊PCI/\left({L}_{max}-{L}_{1}\right)\right⌋$. An SSB index may be based on the identifier of the node, the quantity *L*₁ of SSBs used for cell search in each half frame, and the quantity *Lₘₐₓ* of candidate SSBs in each half frame, that is, may be associated with the identifier of the node, the quantity *L*₁ of SSBs used for cell search in each half frame, and the quantity *Lₘₐₓ* of candidate SSBs in each half frame, or may be a function of the identifier of the node, the quantity *L*₁ of SSBs used for cell search in each half frame, and the quantity *Lₘₐₓ* of candidate SSBs in each half frame. For example, the SSB index may be expressed as PCI%(*Lₘₐₓ* - L₁) + 1 or $\left⌊PCI%\left({L}_{max}-{L}_{1}\right)\right⌋ \times 2 + 1$.

According to a fourth aspect, a communication apparatus is provided, and is configured to implement the communication method in any one of the first aspect or the implementations of the first aspect. The apparatus may be a first node, or may be a module (for example, a processor, a chip, or a chip system) used in the first node, or may be a logical node, a logical module, or software that can implement all or some functions of the first node. In an implementation, the communication apparatus may include a sending unit and a receiving unit, and may further include a processing unit. The sending unit and the receiving unit may be independent of each other, or may be combined together (which may be referred to as a "transceiver unit").

According to a fifth aspect, a communication apparatus is provided, and is configured to implement the communication method in any one of the second aspect or the implementations of the second aspect; or configured to implement the communication method in any one of the third aspect or the implementations of the third aspect. The apparatus may be a second node, or may be a module (for example, a processor, a chip, or a chip system) used in the second node, or may be a logical node, a logical module, or software that can implement all or some functions of the second node. In an implementation, the communication apparatus may include a sending unit and a receiving unit, and may further include a processing unit. The sending unit and the receiving unit may be independent of each other, or may be combined together (which may be referred to as a "transceiver unit").

In a possible implementation, the communication apparatuses in the fourth aspect and the fifth aspect include modules configured to perform the method in any one of the first aspect to the third aspect or any one of the implementations of the first aspect to the third aspect.

In another possible implementation, the communication apparatuses in the fourth aspect and the fifth aspect include a processor coupled to a memory. The processor is configured to support the apparatus in performing a corresponding function in the foregoing communication method. The memory is configured to be coupled to the processor, and stores a program (instructions) and/or data necessary for the apparatus. Optionally, the communication apparatus may further include a communication interface, configured to implement communication between the apparatus and another network element. Optionally, the memory may be located inside the communication apparatus, or may be located outside the communication apparatus.

In another possible implementation, the communication apparatuses in the fourth aspect and the fifth aspect include a processing circuit, configured to perform the communication method according to any one of the implementations of any one of the first aspect to the third aspect, for example, configured to determine a first resource position for a first node to send a first signal, where the first resource position and a second resource position are time division multiplexed and/or frequency division multiplexed, the second resource position is used by a second node to send a second signal, the first resource position is associated with an identifier of the first node, and the second resource position is associated with an identifier of the second node; and send the first signal at the first resource position. The communication apparatus may further include a memory. The memory is configured to store instructions executed by the processing circuit, or store input data required for running instructions by the processing circuit, or store data generated after the processing circuit runs instructions. The memory may be located inside the processing circuit, or may be located outside the processing circuit. Optionally, the communication apparatus may further include a transceiver circuit, and the processing circuit and the transceiver circuit are coupled to each other. The processing circuit is configured to execute a computer program or instructions, to control the transceiver circuit to receive and send information. When the processing circuit executes the computer program or the instructions, the processing circuit is further configured to implement the foregoing method by using a logic circuit or executing code instructions. The transceiver circuit may be a transceiver or an interface circuit, and is configured to receive a signal from a communication apparatus other than the communication apparatus and transmit the signal to the processing circuit, or send a signal from the processing circuit to a communication apparatus other than the communication apparatus. Optionally, the processing circuit includes one or more processors, or a circuit that is in the one or more processors and that is configured to process a signal.

When the communication apparatus in the fourth aspect and the fifth aspect is a chip, the sending unit may be an output unit, for example, an output circuit or a communication interface; and the receiving unit may be an input unit, for example, an input circuit or a communication interface. The transceiver circuit may be an interface circuit or an input/output interface. When the communication apparatus is a terminal, the sending unit may be a transmitter or a transmitter machine; and the receiving unit may be a receiver or a receiver machine. The transceiver circuit may be a transceiver.

According to a sixth aspect, a computer-readable storage medium is provided. The computer-readable storage medium stores a computer program or instructions, and when the computer program or the instructions are executed, the method in the foregoing aspects is implemented.

According to a seventh aspect, a computer program product including instructions is provided. When the instructions are run on a communication apparatus, the communication apparatus is enabled to perform the methods in the foregoing aspects.

According to an eighth aspect, a communication system is provided. The communication system includes the communication apparatus according to the fourth aspect and the communication apparatus according to the fifth aspect.

### BRIEF DESCRIPTION OF DRAWINGS

FIG. 1 is a diagram of sending SS/PBCH blocks by a plurality of existing nodes in a non-orthogonal manner;
FIG. 2 is a diagram of sending SS/PBCH blocks by a plurality of existing nodes in an orthogonal manner;
FIG. 3 is a simplified diagram of a wireless communication system according to an embodiment of this application;
FIG. 4 is a diagram of a format of an SS/PBCH block;
FIG. 5 is a diagram of SS/PBCH block patterns and positions in slots in some scenarios of case A to case E;
FIG. 6 is a diagram of an IAB network topology applicable to an embodiment of this application;
FIG. 7 is a schematic flowchart of a communication method according to an embodiment of this application;
FIG. 8 is a diagram of an example in which SS/PBCH blocks are sent in a time division orthogonal manner according to an embodiment of this application;
FIG. 9 is a diagram of another example in which SS/PBCH blocks are sent in a time division orthogonal manner according to an embodiment of this application;
FIG. 10 is a diagram of another example in which SS/PBCH blocks are sent in a time division orthogonal manner according to an embodiment of this application;
FIG. 11 is a schematic flowchart of another communication method according to an embodiment of this application;
FIG. 12 is a diagram of an example in which SS/PBCH blocks are sent in a frequency division orthogonal manner according to an embodiment of this application;
FIG. 13 is a diagram of another example in which SS/PBCH blocks are sent in a frequency division orthogonal manner according to an embodiment of this application;
FIG. 14 is a diagram of another example in which SS/PBCH blocks are sent in a frequency division orthogonal manner according to an embodiment of this application;
FIG. 15 is a diagram of another example in which SS/PBCH blocks are sent in a frequency division orthogonal manner according to an embodiment of this application;
FIG. 16 is a diagram of another example in which SS/PBCH blocks are sent in a frequency division orthogonal manner according to an embodiment of this application;
FIG. 17 is a diagram of another example in which SS/PBCH blocks are sent in a frequency division orthogonal manner according to an embodiment of this application;
FIG. 18 is a schematic flowchart of another communication method according to an embodiment of this application;
FIG. 19 is a diagram of an example in which SS/PBCH blocks are sent in a time-frequency orthogonal manner according to an embodiment of this application;
FIG. 20 is a diagram of another example in which SS/PBCH blocks are sent in a time-frequency orthogonal manner according to an embodiment of this application;
FIG. 21 is a diagram of a structure of a communication apparatus according to an embodiment of this application; and
FIG. 22 is a diagram of a structure of another communication apparatus according to an embodiment of this application.

### DESCRIPTION OF EMBODIMENTS

The following describes embodiments of this application with reference to the accompanying drawings in embodiments of this application.

To make the objectives, technical solutions, and advantages of this application clearer, the following further describes this application in detail with reference to the accompanying drawings.

At least one piece (item) below in this application indicates one piece (item) or a plurality of pieces (items). A plurality of pieces (items) mean two or more pieces (items). The term "and/or" describes an association relationship of associated objects, and indicates that three relationships may exist. For example, A and/or B may indicate the following three cases: Only A exists, both A and B exist, and only B exists. The character "/" usually indicates an "or" relationship between the associated objects. In addition, it should be understood that, although terms such as first and second may be used in this application to describe objects, the objects are not limited to the terms. The terms are merely used for distinguishing the objects from each other.

The terms "include", "have", and any variants thereof mentioned in the following descriptions of this application are intended to cover a non-exclusive inclusion. For example, a process, method, system, product, or device that includes a series of steps or units is not limited to the listed steps or units, but optionally further includes another unlisted step or unit, or optionally further includes another inherent step or unit for the process, method, product, or device. It should be noted that, in this application, words such as "example" or "for example" are used to represent giving examples, illustrations, or descriptions. Any method or design scheme described as an "example" or "for example" in this application should not be construed as being more preferred or having more advantages than another method or design scheme. Specifically, the words such as "example" or "for example" are used to present related concepts in a specific manner.

It should be understood that, in this application, an indication includes a direct indication (also referred to as an explicit indication) and an implicit indication. Directly indicating information A means including the information A. Implicitly indicating the information A means indicating the information A by using a correspondence between the information A and information B and directly indicating the information B. The correspondence between the information A and the information B may be predefined, prestored, pre-burned, or preconfigured.

It should be understood that, in this application, that information C is used to determine information D includes that the information D is determined based only on the information C, and also includes that the information D is determined based on the information C and other information. In addition, that the information C is used to determine the information D may further include an indirect determining case. For example, the information D is determined based on information E, and the information E is determined based on the information C.

In addition, in embodiments of this application, that "a device A sends information A to a device B" may be understood as that a destination end of the information A or an intermediate device on a transmission path to the destination end is the device B, and may include directly or indirectly sending the information to the device B. That "the device B receives the information A from the device A" may be understood as that a source end of the information A or an intermediate device on a transmission path to the source end is the device A, and may include directly or indirectly receiving the information from the device A. Information may undergo necessary processing, for example, a format change, between a source end and a destination end of information sending. However, the destination end can understand valid information from the source end. Similar expressions in this application may be understood similarly. Details are not described herein.

The technology provided in this application may be applied to various communication systems. For example, the communication system may be a 4th generation (4^{th} generation, 4G) communication system (for example, a long term evolution (long term evolution, LTE) system), a 5th generation (5^{th} generation, 5G) communication system, a worldwide interoperability for microwave access (worldwide interoperability for microwave access, WiMAX) or wireless local area network (wireless local area network, WLAN) system, a converged system of a plurality of systems, or a future communication system, for example, a 6th generation (6^{th} generation, 6G) communication system. The 5G communication system may also be referred to as a new radio (new radio, NR) system.

A device in the communication system may send a signal to another device or receive a signal from another device. The signal may include information, signaling, data, or the like. The device may also be replaced with an entity, a network entity, a network element, a mobile node, a terminal device, a communication module, a node, a communication node, or the like. In this application, the device is used as an example for description. For example, the communication system may include at least one terminal device and at least one access network device. The access network device may send a downlink signal to the terminal device, and/or the terminal device may send an uplink signal to the access network device. In addition, it may be understood that, if the communication system includes a plurality of terminal devices, the plurality of terminal devices may also send signals to each other. That is, both a signal sending device and a signal receiving device may be terminal devices.

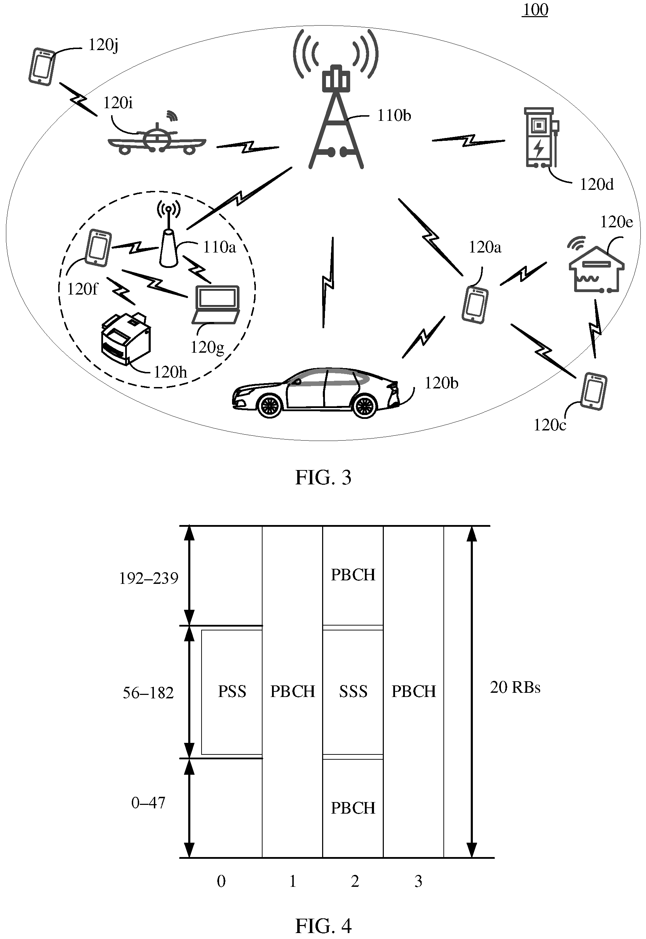

A communication method provided in embodiments of this application may be applied to a wireless communication system like 5G, 6G, or satellite communication. Refer to FIG. 3. FIG. 3 is a simplified diagram of a wireless communication system according to an embodiment of this application. As shown in FIG. 3, the wireless communication system includes a radio access network 100. The radio access network 100 may be a next generation (for example, 6G or higher-version) radio access network, or a conventional (for example, 5G or 4G) radio access network. One or more terminal devices (120a to 120j, which are collectively referred to as 120) may be interconnected or connected to one or more network devices (110a and 110b, which are collectively referred to as 110) in the radio access network 100. Optionally, FIG. 3 is merely a diagram. The wireless communication system may further include another device, for example, may further include a core network device, a wireless relay device, and/or a wireless backhaul device, which are not shown in FIG. 3.

Optionally, in actual application, the wireless communication system may include a plurality of network devices (also referred to as access network devices) at the same time, and may include a plurality of terminal devices at the same time. One network device may serve one or more terminal devices at the same time. One terminal device may access one or more network devices at the same time. A quantity of terminal devices and a quantity of network devices that are included in the wireless communication system are not limited in embodiments of this application.

The network device may be an entity that is configured to transmit or receive a signal on a network side. The network device may be an access device through which the terminal device accesses the wireless communication system in a wireless manner. For example, the network device may be a base station. The base station may cover various names below in a broad sense, or may be replaced with the following names, for example, a radio access network (radio access network, RAN) node (node), a NodeB (NodeB), an evolved NodeB (evolved NodeB, eNB), a next generation NodeB (next generation NodeB, gNB), an access network device in an open radio access network (open radio access network, O-RAN), a relay station, an integrated access and backhaul (integrated access and backhaul, IAB) node (for example, a base station (base station, BS) function part in the IAB node), an access point, a transmitting and receiving point (transmitting and receiving point, TRP), a transmitting point (transmitting point, TP), a master station (master eNB, MeNB), a secondary station (secondary eNB, SeNB), a multi-standard radio (multi-standard radio, MSR) node, a home base station, a network controller, an access node, a wireless node, an access point (access point, AP), a transmission node, a transceiver node, a baseband unit (building baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), a central unit control plane (CU control plane, CU-CP) node, a central unit user plane (CU user plane, CU-UP) node, or a positioning node. The base station may be a macro base station, a micro base station, a relay node, a donor node, or the like, or a combination thereof. Alternatively, the network device may be a communication module, a modem, or a chip that is disposed in the foregoing device or apparatus. Alternatively, the network device may be a mobile switching center, a device that functions as a base station in device-to-device (device-to-device, D2D), vehicle-to-everything (vehicle-to-everything, V2X), or machine-to-machine (machine-to-machine, M2M) communication, a network side device in a 6G network, a device that functions as a base station in a future communication system, or the like. The network device may support networks using a same access technology or different access technologies. Neither of a specific technology and a specific device form used by the network device is limited in embodiments of this application.

The network device may be fixed or mobile. For example, the base stations 110a and 110b are stationary, and are responsible for wireless transmission and reception in one or more cells from the terminal device 120. The helicopter or uncrewed aerial vehicle 120i shown in FIG. 3 may be configured to serve as a mobile base station, and one or more cells may move based on a position of the mobile base station 120i. In another example, the helicopter or uncrewed aerial vehicle (120i) may be configured to serve as a terminal device communicating with the base station 110b.

In this application, a communication apparatus configured to implement a function of the access network may be an access network device, a network device having a part of functions of the access network, or an apparatus that can support implementation of the function of the access network, for example, a chip system, a hardware circuit, a software module, or a hardware circuit plus a software module. The apparatus may be mounted in the access network device or used together with the access network device. In the method in this application, an example in which the communication apparatus configured to implement the function of the access network device is an access network device is used for description.

The terminal device may be an entity, for example, a mobile phone, that is configured to receive or transmit a signal on a user side. The terminal device may be configured to connect to a person, an object, and a machine. The terminal device may communicate with one or more core networks via the network device. The terminal device includes a handheld device having a wireless connection function, another processing device connected to a wireless modem, a vehicle-mounted device, or the like. The terminal device may be a portable, pocket-sized, handheld, computer built-in, or vehicle-mounted mobile apparatus. The terminal device 120 may be widely used in various scenarios, such as cellular communication, D2D, V2X, point-to-point (point-to-point, P2P), machine-to-machine (machine-to-machine, M2M), machine type communication (machine type communication, MTC), an internet of things (internet of things, IoT), virtual reality (virtual reality, VR), augmented reality (augmented reality, AR), industrial control, self-driving, telemedicine, a smart grid, smart furniture, a smart office, a smart wearable, smart transportation, a smart city, an uncrewed aerial vehicle, a robot, remote sensing, passive sensing, positioning, navigation and tracking, and autonomous delivery and mobility. Some examples of the terminal device 120 are user equipment (user equipment, UE), a fixed device, a mobile device, a handheld device, a wearable device, a cellular phone, a smartphone, a session initiation protocol (session initiation protocol, SIP) phone, a notebook computer, a personal computer, a smart book, a vehicle, a satellite, a global positioning system (global positioning system, GPS) device, a target tracking device, an uncrewed aerial vehicle, a helicopter, an aircraft, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device like a smartwatch, a virtual reality (virtual reality, VR) device, an augmented reality (augmented reality, AR) device, a wireless terminal in industrial control (industrial control), a terminal in an internet of vehicles system, a wireless terminal in self-driving (self-driving), a wireless terminal in a smart grid (smart grid), a wireless terminal in transportation safety (transportation safety), a wireless terminal like a smart fueler in a smart city (smart city), a terminal device on a high-speed train, and a wireless terminal like a smart speaker, a smart coffee machine, or a smart printer in a smart home (smart home). The terminal device 120 may be a wireless device in the foregoing scenarios or an apparatus disposed in the wireless device, for example, a communication module, a modem, or a chip in the foregoing device. The terminal device may also be referred to as a terminal, a terminal device, UE, a mobile station (mobile station, MS), a mobile terminal (mobile terminal, MT), or the like. Alternatively, the terminal device may be a terminal device in a future wireless communication system. The terminal device may be used in a dedicated network device, a general-purpose device, or the like. Neither of a specific technology and a specific device form used by the terminal device is limited in embodiments of this application.

By way of example and not limitation, in embodiments of this application, the terminal device may alternatively be a part that is of a network device and that is configured to implement a function of a terminal device. For example, the network device may be an IAB node, and the IAB node integrates two parts: a mobile terminal (mobile termination, MT) and a distributed unit (distributed unit, DU), or an MT and a BS. The BS includes a central unit (central unit, CU) and a DU. When facing a parent node of the IAB node, the IAB node may be considered as a terminal. In this case, the IAB node plays a role of an MT.

Optionally, the terminal device may be configured to serve as a base station. For example, the UE may serve as a scheduling entity that provides sidelink signals between UEs in V2X, D2D, P2P, or the like. As shown in FIG. 3, a cellular phone 120a and a vehicle 120b communicate with each other by using sidelink signals. The cellular phone 120a communicates with a smart home device 120e without relaying a communication signal via the base station 110b.

In this application, a communication apparatus configured to implement a function of the terminal device may be a terminal device, a terminal device having a part of functions of the terminal device, or an apparatus that can support implementation of the foregoing function of the terminal device, for example, a chip system. The apparatus may be mounted in the terminal device or used together with the terminal device. In this application, the chip system may include a chip, or may include a chip and another discrete component. In the technical solutions provided in this application, an example in which the communication apparatus is a terminal device or UE is used for description.

Optionally, the wireless communication system usually includes a cell, the base station provides cell management, and the base station provides a communication service for a plurality of mobile stations (mobile station, MS) in the cell. The base station includes a baseband unit (baseband unit, BBU) and a remote radio unit (remote radio unit, RRU). The BBU and the RRU may be placed at different places. For example, the RRU is remote and placed in a heavy-traffic area, and the BBU is placed in a central equipment room. Alternatively, the BBU and the RRU may be placed in a same equipment room. Alternatively, the BBU and the RRU may be different components at a same rack. Optionally, one cell may correspond to one carrier or component carrier.

In some deployments, the network device mentioned in embodiments of this application may be a device including a CU or a DU, a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device may include a gNB-CU-CP, a gNB-CU-UP, and a gNB-DU.

In some deployments, a plurality of RAN nodes coordinate to assist the terminal in implementing radio access, and different RAN nodes respectively implement some functions of a base station. For example, the RAN node may be a CU, a DU, a CU-CP, a CU-UP, or an RU. The CU and the DU may be separately arranged, or may be included in a same network element, for example, a BBU. The RU may be included in a radio frequency device or a radio frequency unit, for example, included in an RRU, an active antenna unit (active antenna unit, AAU), or a remote radio head (remote radio head, RRH).

The RAN node may support one or more types of fronthaul interfaces, and different fronthaul interfaces respectively correspond to a DU and a remote unit (remote unit, RU) having different functions. If a fronthaul interface between the DU and the RU is a common public radio interface (common public radio interface, CPRI), the DU is configured to implement one or more baseband functions, and the RU is configured to implement one or more radio frequency functions. If a fronthaul interface between the DU and the RU is another type of interface, in comparison with the CPRI, some downlink and/or uplink baseband functions, for example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or more of digital beamforming (beamforming, BF) or fast Fourier transform (fast Fourier transform, FFT)/cyclic prefix (cyclic prefix, CP) removal are moved from the DU to the RU for implementation. In a possible implementation, the interface may be an enhanced common public radio interface (enhanced common public radio interface, eCPRI). In an eCPRI architecture, split manners of the DU and RU are different, and correspond to different categories (category, Cat) of eCPRIs, such as eCPRI Cat A, B, C, D, E, and F.

eCPRI Cat A is used as an example. For downlink transmission, splitting is performed at layer mapping. The DU is configured to implement layer mapping and one or more previous functions (that is, one or more of encoding, rate matching, scrambling, modulation, and layer mapping). Another function (for example, one or more of resource element (resource element, RE) mapping, digital beamforming (beamforming, BF), or inverse fast Fourier transform (inverse fast Fourier transform, IFFT)/CP addition) after layer mapping is moved to the RU for implementation. For uplink transmission, splitting is performed at RE demapping. The DU is configured to implement demapping and one or more previous functions (that is, one or more of decoding, de-rate matching, descrambling, demodulation, inverse discrete Fourier transform (inverse discrete Fourier transform, IDFT), channel equalization, and RE demapping). Another function after demapping (for example, one or more of digital BF or FFT/CP removal) is moved to the RU for implementation. It may be understood that, for function descriptions of DUs and RUs corresponding to various categories of eCPRIs, refer to an eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any unit in the CU (or the CU-CP or the CU-UP), the DU, and the RU in this application may be implemented by using a software module, a hardware module, or a combination of the software module and the hardware module.

In embodiments of this application, an apparatus configured to implement a function of a network device may be a network device, or may be an apparatus that can support the network device in implementing the function, for example, a chip system, a hardware circuit, a software module, or a combination of a hardware circuit and a software module. The apparatus can be installed in the network device, or can match the network device for use. In embodiments of this application, only an example in which the apparatus for implementing the function of the network device is a network device is used for description, and constitutes no limitation on the solutions in embodiments of this application.

It may be understood that, this application may be applied between a network device and a terminal device.

Communication between a network device and a terminal device complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a medium access control (medium access control, MAC) layer, and a physical layer. For example, the user plane protocol layer structure may include functions of protocol layers such as a PDCP layer, an RLC layer, a MAC layer, and a physical layer. In a possible implementation, a service data adaptation protocol (service data adaptation protocol, SDAP) layer may be further included above the PDCP layer.

Optionally, the protocol layer structure between the network device and the terminal device may further include an artificial intelligence (artificial intelligence, AI) layer for transmitting data related to an AI function.

Possible data transmission between the network device and the terminal device is used as an example. Data transmission may pass through the user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer. Then, the MAC layer generates a transport block, and subsequently wireless transmission is performed through the physical layer. Data is correspondingly encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be used for providing a service for an application installed on the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be used for forwarding user data, for example, forwarding uplink data received from the application layer to the SDAP layer, or forwarding downlink data received from the SDAP layer to the application layer.

It should be understood that, a quantity and types of devices in the communication system shown in FIG. 3 are merely used as an example. This application is not limited thereto. In actual application, the communication system may further include more terminal devices and more access network devices, and may further include another network element, for example, may include a core network device and/or a network element configured to implement an artificial intelligence function.

It may be understood that, all or a part of functions implemented by one or more of the terminal device, the access network device, the core network device, or the network element configured to implement the artificial intelligence function may be virtualized, that is, implemented by using one or more of a dedicated processor or a general-purpose processor and a corresponding software module. Because the terminal device and the access network device are related to an air interface transmission interface, a transceiver function of the interface may be implemented by hardware. Core network devices such as an operations, administration, and maintenance (operations, administration, and maintenance, OAM) network element can all be virtualized. Optionally, one or more functions of the virtualized terminal device, access network device, core network device, or network element configured to implement the artificial intelligence function may be implemented by a cloud device, for example, implemented by a cloud device in an over-the-top (over-the-top, OTT) system.

The following describes a format, a function, and the like of an SS/PBCH block in embodiments of this application.

The SS/PBCH block is information to be first demodulated by a terminal device in an initial access process. FIG. 4 is a diagram of a format of an SS/PBCH block. The SS/PBCH block includes a primary synchronization signal (primary synchronization signal, PSS), a secondary synchronization signal (secondary synchronization signal, SSS), and a physical broadcast channel (physical broadcast channel, PBCH). The SS/PBCH block includes a two-dimensional area of four orthogonal frequency division multiplexing (orthogonal frequency division multiplexing, OFDM) symbols in time domain and 20 resource blocks (resource block, RB) in frequency domain. A time domain position is specified in the protocol, and a frequency domain position is configurable.

In the initial access process, the terminal device obtains a cell identifier (identifier, ID), frequency synchronization, and downlink time synchronization through initial downlink synchronization. This may be referred to as a first step. A process of performing initial downlink synchronization on the received SS/PBCH block includes three parts: PSS search, SSS detection, and PBCH detection. The terminal device may complete cell synchronization and coarse symbol-level timing synchronization by demodulating the PSS and the SSS. The PBCH carries master information block (master information block, MIB) information configured at a higher layer.

In a second step, by demodulating the MIB information, the terminal device completes system frame-level timing synchronization, and obtain position information of a system information block 1 (system information block 1, SIB1), that is, remaining minimum system information (remaining minimum system information, RMSI). Further, the terminal device may receive a type0 physical downlink control channel (type0 physical downlink control channel, type0-PDCCH) based on information in the SIB1, and then receive a physical downlink shared channel (physical downlink shared channel, PDSCH). A control resource set CORESET #0 (Control Resource Set 0) is information about the Type0-PDCCH, and the terminal device obtains information about the CORESET #0 to perform blind detection for downlink control information (downlink control information, DCI) corresponding to a SIB, and then receives the SIB.

In a third step, a PDSCH for scheduling the SIB1 is found based on the position information, and the SIB1 is demodulated from the PDSCH to obtain random access related configuration information.

During specific implementation, the network device may send a plurality of SS/PBCH blocks in a time division multiplexing (time division multiplexing, TDM) manner. Optionally, the network device may send the plurality of SS/PBCH blocks in a form of an SS/PBCH block burst set. Further, the network device may configure a period of the SS/PBCH block burst set by using the SIB1, and periodically send the SS/PBCH block burst set. The period supports: 5 ms, 10 ms, 20 ms, 40 ms, 80 ms, and 160 ms. In the period of the SS/PBCH block burst set, a quantity of SS/PBCH blocks in the SS/PBCH block burst set is related to a frequency band and/or a subcarrier spacing (subcarrier spacing, SCS). The frequency band may be understood as a frequency band (or referred to as a spectrum) in which the network device and/or the terminal device are/is located, and the subcarrier spacing may be understood as a subcarrier spacing used by the network device and/or the terminal device. Usually, a frequency band in which the network device is located is the same as that in which the terminal device is located, and a subcarrier spacing used by the network device is the same as that used by the terminal device. The frequency band may include a low frequency band (for example, a frequency band whose carrier frequency is less than 6 GHz) and a high frequency band (for example, a spectrum of 52.6 GHz to 71 GHz). It may be understood that the low frequency band may be a frequency band in a frequency range, and the frequency band is lower than a preset frequency. The high frequency band may be a frequency band in a frequency range, and the frequency band is higher than a preset frequency. In some scenarios, the frequency band may be a licensed frequency band or referred to as an operator spectrum. In some other scenarios, the frequency band may be an unlicensed frequency band or referred to as a non-operator spectrum. Optionally, the quantity of SS/PBCH blocks included in the SS/PBCH block burst set may be related to a frequency band in which the network device and/or the terminal device operate/operates. For example, when the frequency band f is less than or equal to 3 GHz, a maximum quantity of SS/PBCH blocks in the SS/PBCH block burst set may be 4 and a minimum quantity thereof may be 1; or when the frequency band f is greater than 3 GHz and less than or equal to 6 GHz, a maximum quantity of SS/PBCH blocks in the SS/PBCH block burst set may be 8 and a minimum quantity thereof may be 1; or when the frequency band f is greater than 6 GHz, a maximum quantity of SS/PBCH blocks in the SS/PBCH block burst set may be 64, and a minimum quantity thereof may be 1.

When the period of sending the SS/PBCH block burst set by the network device is 5 ms (5 ms corresponds to time of a half radio system frame), the following plurality of SS/PBCH block formats/patterns are defined, and an SS/PBCH block format corresponding to each SS/PBCH block scanning period in different subcarrier spacings is described as follows:

Case (case) A-15 kHz SCS: An index of a first symbol (or referred to as a start symbol) of a candidate SS/PBCH block may be {2,8} + 14 · *n*.
- For an operation of accessing a non-shared spectrum channel:
- A carrier frequency is less than or equal to 3 GHz, and n=0, 1.
- A carrier frequency in a frequency range 1 (frequency range 1, FR1) is greater than 3 GHz, and n=0, 1, 2, 3.
- For an operation of accessing a shared spectrum channel, n=0, 1, 2, 3, 4.

Case B-30 kHz SCS: An index of a first symbol of a candidate SS/PBCH block may be {4,8,16,20} + 28 · *n*. A carrier frequency is less than or equal to 3 GHz, and n=0; and a carrier frequency in FR1 is greater than 3 GHz, and n=0, 1.

Case C-30 kHz SCS: An index of a first symbol of a candidate SS/PBCH block may be {2,8} + 14 · *n*.
- For an operation of accessing a non-shared spectrum channel:
- For paired spectrum operations:
- A carrier frequency is less than or equal to 3 GHz, and n=0, 1; and a carrier frequency in FR1 is greater than 3 GHz, and n=0, 1, 2, 3.
- For unpaired spectrum operations:
- A carrier frequency is less than 1.88 GHz, and n=0, 1; and a carrier frequency in FR1 is greater than or equal to 1.88 GHz, and n=0, 1, 2, 3.
- For an operation of accessing a shared spectrum channel, n=0, 1, 2, 3, 4, 5, 6, 7, 8, 9.

Case D-120 kHz SCS: An index of a first symbol of a candidate SS/PBCH block may be {4,8,16,20} + 28 · *n*. For a carrier frequency in FR2, n=0, 1, 2, 3, 5, 6, 7, 8, 10, 11, 12, 13, 15, 16, 17, 18.

Case E-240 kHz SCS: An index of a first symbol of a candidate SS/PBCH block may be {8,12,16,20,32,36,40,44} + 56 · *n.* For a carrier frequency in FR2-1, n=0, 1, 2, 3, 5, 6, 7, 8.

Case F-480 kHz SCS: An index of a first symbol of a candidate SS/PBCH block may be {2, 9} + 14 · *n*. For a carrier frequency in FR2-2, n=0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31.

Case G-960 kHz SCS: An index of a first symbol of a candidate SS/PBCH block may be {2, 9} + 14 · *n*. For a carrier frequency in FR2-2, n=0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31.

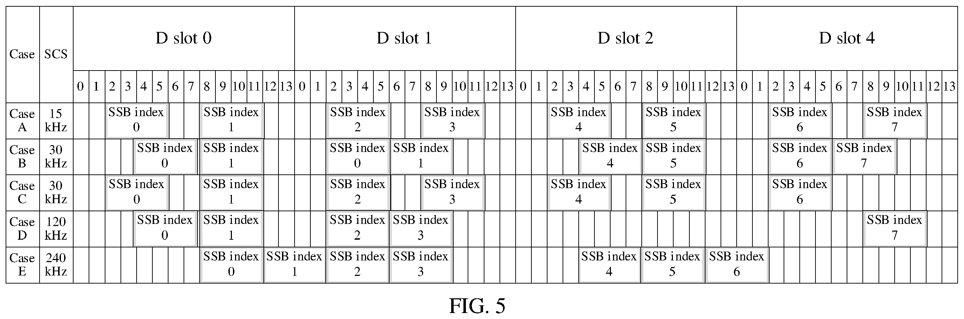

That the subcarrier spacing of the SS/PBCH block is 30 kHz is used as an example for description. For an operator spectrum, when the frequency band f is less than or equal to 3 GHz, an expression of a start symbol of the SS/PBCH block is {2,8} + 14 · *n,* where *n* = 0,1. Because 14 is a quantity of OFDM symbols occupied by one slot, 14 may indicate that the SS/PBCH block is cycled in a unit of one slot. 2 or 8 may represent a start symbol of the SS/PBCH block in each slot. In other words, the pattern (pattern) (which may also be understood as position distribution) of the SS/PBCH block burst set is cycled in a unit of one slot. In each slot, a relative position of the SS/PBCH block in the pattern of the SS/PBCH block is the same. It may also be understood that in different SS/PBCH block burst sets, offsets of SS/PBCH blocks with a same relative position with respect to start positions in SS/PBCH block burst sets to which the SS/PBCH blocks respectively belong are the same. For below 3 GHz (Sub3G), a maximum quantity of sent SS/PBCH blocks is 4. For 3 GHz to 6 GHz (Sub3G to Sub6G), a maximum quantity of sent SS/PBCH blocks is 8. For above 6 GHz (above 6G), a maximum of 64 SS/PBCH blocks are defined. A quantity of beams that can be implemented by a base station is determined based on a capability of the base station. FIG. 5 is a diagram of SS/PBCH block patterns and positions in slots in some scenarios of case A to case E. Each SS/PBCH block has a unique number: an SS/PBCH block index. For a low frequency, the SS/PBCH block index may be directly obtained from a pilot of a PBCH channel. For a high frequency, 3 least significant bits may be obtained from a PBCH pilot signal, and 3 most significant bits may be obtained from a MIB message. When an actual quantity of SS/PBCH blocks sent in a cell is less than a maximum quantity of SS/PBCH blocks defined in a protocol, a SIB1 or other RRC signaling may be used for indicating which SS/PBCH blocks are not sent. These idle positions may be used to send PDSCH data.

As described in the background, currently, SS/PBCH blocks sent in different cells of a cellular network are not orthogonalized, and there are problems of measurement interference and a mutual measurement failure. Alternatively, according to the NR protocol, the SS/PBCH block is periodically sent in a unit of 5 ms half frame in time domain, a symbol position of the SS/PBCH block depends on an SCS, and different cells send SS/PBCH blocks in an orthogonal manner at a granularity of a minimum unit of 5 ms. In other words, different cells send SS/PBCH blocks in different 5 ms, to avoid measurement interference. A measurement delay is long.

In view of this, the following embodiments of this application provide a communication solution. A first resource position for a first node to send a first signal and a second resource position for a second node to send a second signal are time division multiplexed and/or frequency division multiplexed, the first resource position is associated with an identifier of the first node, and the second resource position is associated with an identifier of the second node, so that quick measurement of a plurality of nodes can be implemented and interference between signals can be avoided.

Embodiments of this application may be applied to any one of the following scenarios: a relay (relay) scenario, a wireless mesh network (mesh) scenario, an IAB scenario, an ad hoc network scenario, and the like.

For example, the following describes the IAB scenario.

With the development of technologies such as VR, AR, and the internet of things, there are more terminals in a future network, and usage of network data increases continuously. To adapt to the increasing quantity of terminals and the rapidly increasing usage of network data in the market, higher requirements are imposed on the capacity of a 5G network. In a hotspot area, to satisfy a 5G ultra-high capacity requirement, using high-frequency small cells for networking becomes more popular. High-frequency carriers have a poor propagation characteristic, are severely attenuated if blocked, and have small coverage. Therefore, a large quantity of small cells need to be densely deployed in the hotspot area. These small cells may be IAB nodes.

To design a flexible and convenient access and backhaul solution, a wireless transmission solution is applied to both an access link (access link, AL) and a backhaul link (backhaul link, BL) in an IAB scenario. In a network including an IAB node (referred to as an IAB network for short below), the IAB node may provide a wireless access service for a terminal device, and is connected to a donor node (donor node) via a wireless backhaul link for transmission of service data of a user. For example, the donor node may be a donor base station. In a 5G network, the donor base station may be referred to as an IAB donor (IAB donor) or a donor next generation node base station (donor next generation node base station, DgNB) for short. The donor node may be a complete entity, or may be in a form in which a CU and a DU are separated. That is, the donor node includes a donor-CU (donor-CU) and a donor-DU (donor-DU). The donor-CU may be in a form in which a UP and a CP are separated, that is, the donor-CU includes a CU-UP and a CU-CP. The IAB node is connected to a core network via the donor node through a wired link. For example, in a 5G standalone architecture, the IAB node is connected to a 5G core network (5G core, 5GC) via the donor node through the wired link. In a 5G non-standalone architecture, the IAB node is connected to an evolved packet core network (evolved packet core, EPC) via an eNB on the control plane, and is connected to the EPC via the donor node and the eNB on the user plane.

To ensure service transmission reliability, the IAB network supports multi-hop IAB node and multi-connectivity IAB node networking. Therefore, there may be a plurality of transmission paths between the donor node and an IAB node. On a path, there is a determined hierarchical relationship between IAB nodes, and between an IAB node and a donor node served by the IAB node. Each IAB node considers, as a parent node, a node providing a backhaul service for the IAB node. Correspondingly, each IAB node may be considered as a child node of a parent node of the IAB node, or a downstream (lower-level) node that is far away from a donor node of an IAB node and adjacent to the IAB node is referred to as a child node of the IAB node.

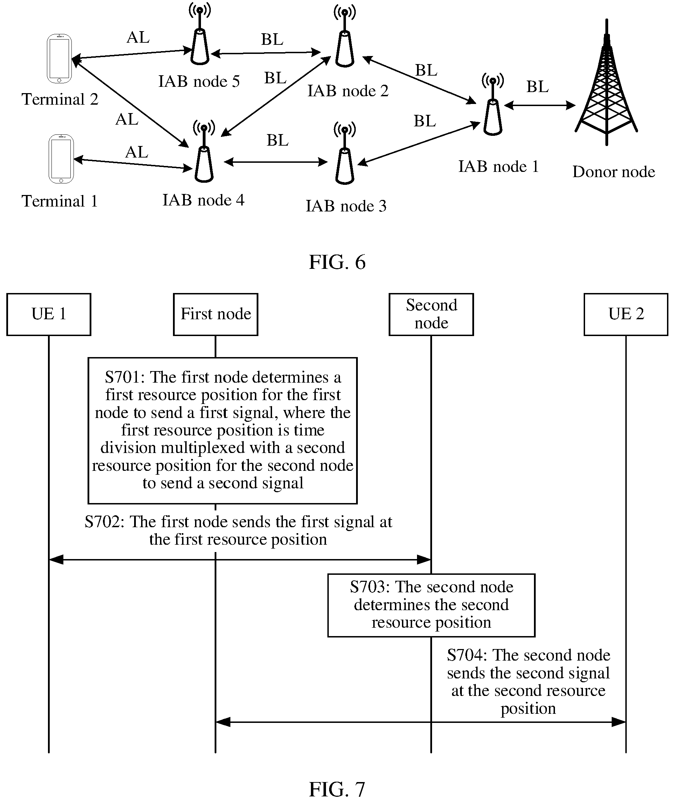

FIG. 6 is a diagram of an IAB network topology applicable to an embodiment of this application. A parent node of an IAB node 1 is a donor node, the IAB node 1 is a parent node of an IAB node 2 and an IAB node 3, both the IAB node 2 and the IAB node 3 are parent nodes of an IAB node 4, and a parent node of an IAB node 5 is the IAB node 2. In the network architecture shown in FIG. 6, an uplink data packet of a terminal may be transmitted to a donor node via one or more IAB nodes, and then sent by the donor node to a mobile gateway device (for example, a user plane function (user plane function, UPF) network element in a 5G network). After being received by the donor node from the mobile gateway device, a downlink data packet is sent to the terminal via one or more IAB nodes. For example, the IAB node may be customer premises equipment (customer premises equipment, CPE) or a residential gateway (residential gateway, RG). For example, the terminal device and the network device in embodiments of this application may correspond to a node and a parent node of the node in FIG. 6. For example, the terminal device and the network device in embodiments of this application may be a terminal 1 and the IAB node 4 (that is, a parent node of the terminal 1). For another example, the terminal device and the network device in embodiments of this application may be the IAB node 3 and the IAB node 1 (that is, a parent node of the IAB node 3).

For ease of understanding the technical solutions of this application, related concepts in embodiments of this application are first briefly described. However, this is not limited.
1. Radio frame (frame): A plurality of radio frames may be obtained through division in time domain. For example, a length of each radio frame is 10 ms. For example, the radio frame in this application may also be referred to as a system frame, a radio system frame, or a frame.
2. Subframe (subframe): One radio frame is divided into a plurality of subframes, for example, divided into 10 subframes numbered #0 to #9. A length of each subframe is 1 ms.
   In an LTE system, there is only one type of subcarrier spacing, that is, 15 kHz. Therefore, each subframe has two slots (slot), and each slot is 0.5 ms. However, in an NR system, a slot length depends on a subcarrier spacing, and there are a plurality of optional subcarrier spacings, for example, 15 kHz, 30 kHz, 60 kHz, 120 kHz, and 240 kHz. A larger subcarrier spacing indicates shorter duration of a slot. For example, when the subcarrier spacing is 30 kHz, each subframe has two slots, and each slot is 0.5 ms. In this case, each radio frame includes 20 slots numbered #0 to #19.
3. System frame number (system frame number, SFN): is a number of each radio frame.
4. Time domain resource: In embodiments of this application, data or information may be carried by using the time domain resource. A time-frequency resource may include one or more time domain units (which may also be referred to as time units, time elements, or the like).

In time domain, a smallest granularity is an orthogonal frequency division multiplexing (orthogonal frequency division multiplexing, OFDM) symbol. One time domain unit (also referred to as a time unit) may be one symbol or several OFDM symbols, or one slot (slot), or one mini-slot (mini-slot), or one subframe (subframe). One slot may include seven or 14 symbols. One mini-slot may include at least one symbol (for example, two symbols, seven symbols, 14 symbols, or any quantity of symbols fewer than or equal to 14 symbols). Duration of one subframe in time domain may be 1 millisecond (ms).

FIG. 7 is a schematic flowchart of a communication method according to an embodiment of this application. For example, the method may include the following steps.

S701: A first node determines a first resource position for the first node to send a first signal.

In this embodiment, the first node sends the first signal at the first resource position, and UE served by the first node receives the first signal at the first resource position and performs measurement. Before sending the first signal, the first node needs to determine the first resource position. However, a second node may be in a network range close to the first node. If the first resource position for the first node to send the first signal is different from a second resource position for the second node to send a second signal, interference to a signal sent by a peer node can be avoided.

To avoid interference to the second signal, in this embodiment, the first resource position and the second resource position are time division multiplexed. The first resource position is associated with an identifier of the first node, and the second resource position is associated with an identifier of the second node. For example, the first resource position is a function of the identifier of the first node, and the second resource position is a function of the identifier of the second node. Resource positions of the first node and the second node are time division multiplexed, and time domain resource positions of the first node and the second node are associated with the identifiers of the nodes, so that signal interference from an adjacent node can be avoided, and a measurement delay can be reduced.

In this embodiment, an example in which the first signal and the second signal are SS/PBCH blocks is used for description. Alternatively, the first signal or the second signal may be another signal, for example, one or more of a channel state information-reference signal (channel state information-reference signal, CSI-RS), a sounding reference signal (sounding reference signal, SRS), a demodulation reference signal (demodulation reference signal, DMRS), a tracking reference signal (tracking reference signal, TRS), and a phase tracking reference signal (phase tracking reference signal, PTRS). This is not limited in this embodiment of this application.

Different nodes send SS/PBCH blocks in a time division orthogonal manner. In this embodiment, an example in which the first node and the second node send SS/PBCH blocks in a time division orthogonal manner is used for description. In another embodiment, the first node may further send an SS/PBCH block in a time division orthogonal manner with another node. That is, the first resource position may be further time division multiplexed with an x^{th} resource position. The x^{th} resource position is used by an x^{th} node to send a third signal (for example, an SS/PBCH block), and the x^{th} resource position is associated with an identifier of the x^{th} node, where x is a natural number.

A time domain position occupied by each SS/PBCH block reuses the SS/PBCH time domain resource format described in the foregoing case A to case G. However, for different nodes, SS/PBCH blocks are sent at different time domain absolute positions. The resource position in this embodiment is the time domain absolute position. For example, the first resource position is associated with an offset of a half frame in which the first resource position is located in a period of an SS/PBCH block (SS/PBCH transmission timing offset of a half frame in a SS/PBCH block period) and an index of the SS/PBCH block in the half frame (the index of SS/PBCHs to be transmitted in the half frame), where one period includes at least one half frame.

The transmission period of the SS/PBCH block is supported to be 5 ms, 10 ms, 20 ms, 40 ms, 80 ms, or 160 ms. For example, it is assumed that the period is 20 ms and includes four half frames, and the half frame in which the first resource position is located may be a 0^{th}, 1^{st}, 2^{nd}, or 3^{rd} half frame. Assuming that the half frame in which the first resource position is located is the 0^{th} half frame in the period, the offset of the half frame in which the first resource position is located in the period of the SS/PBCH block is 0; assuming that the half frame in which the first resource position is located is the 1^{st} half frame in the period, the offset of the half frame in which the first resource position is located in the period of the SS/PBCH block is 1; and so on. In other words, the offset uses a half frame as a granularity or unit. It may be understood that, the offset may alternatively be a quantity of milliseconds corresponding to the half frame, for example, use 5 ms as a granularity or unit. In the following descriptions, an example in which the offset uses the half frame as a granularity or unit is used for description. When the offset uses 5 ms as a granularity or unit, the offset (that is, a quantity of offset half frames) below may be equal to the offset (that is, a quantity of offset milliseconds)/5 ms.

Further, the offset of the half frame in which the first resource position is located in the period of the SS/PBCH block is associated with the identifier of the first node and a quantity *Lₘₐₓ* of candidate positions of the SS/PBCH block in the half frame. For example, the offset of the half frame in which the first resource position is located in the period of the SS/PBCH block, the identifier of the first node, and the quantity *Lₘₐₓ* of candidate positions of the SS/PBCH block in the half frame satisfy a first function relationship. For example, *Lₘₐₓ* is determined based on a time domain position of the SS/PBCH block defined in a protocol, a subframe format configured in a current system, or an uplink-downlink configuration configured in a current system; or is a predefined or configured value. For example, the first function relationship may be: The offset of the half frame in which the first resource position is located in the period of the SS/PBCH block is equal to $\left⌊identifier of the first node/{L}_{max}\right⌋$ or $\left⌊\left(identifier of the first node+m\right)/{L}_{max}\right⌋$, that is, an offset m is added to each node identifier, where m is a natural number or an integer. / represents division, and └ ┘ represents rounding down. It may be understood that, $\left⌊\left(identifier of the first node+m\right)/{L}_{max}\right⌋$ may be replaced with $\left⌊\left(identifier of the first node-m\right)/{L}_{max}\right⌋$, that is, an offset m is subtracted from each node identifier, where m is a natural number or an integer.

The index of the first signal in the half frame is associated with the identifier of the first node and the quantity *Lₘₐₓ* of candidate positions of the SS/PBCH in the half frame. For example, the index of the SS/PBCH block in the half frame, the identifier of the first node, and the quantity *Lₘₐₓ* of candidate positions of the SS/PBCH block in the half frame satisfy a second function relationship. For example, the second function relationship may be: The index of the SS/PBCH block in the half frame is equal to identifier of the first *node%Lₘₐₓ* or (identifier of the first node+m)%*Lₘₐₓ*, that is, an offset m is added to each node identifier, where m is a natural number or an integer. % represents a modulo operation. (identifier of the first node+m)%*Lₘₐₓ* may be replaced with (identifier of the first node-m)%*Lₘₐₓ*, that is, an offset m is subtracted from each node identifier, where m is a natural number or an integer.

For example, the identifier of the first node may be a node identifier or a physical cell identifier (physical cell identifier, PCI).

Further, for a CU-DU separated network architecture, a CU may send configuration information of the first resource position to a DU by using an F1 application protocol (F1 application protocol, F1-AP) message. The configuration information may include the offset of the half frame in which the first resource position is located in the period of the SS/PBCH block and the index of the SS/PBCH block in the half frame.

In frequency domain, SS/PBCH blocks of different nodes occupy a same frequency domain resource, for example, 20 RBs at a same frequency domain position.

S702: The first node sends the first signal at the first resource position.

UE 1 served by the first node may receive the first signal at the first resource position.

In addition, the second node may be a next-hop node of the first node, and the second node may further receive the first signal at the first resource position.

S703: The second node determines the second resource position.

S704: UE 2 served by the second node may receive the second signal at the second resource position.

The second node determines the second resource position, and the second resource position and the first resource position are time division multiplexed. Therefore, the second node sends the second signal at the second resource position, and the first signal does not cause interference to the second signal, or the second signal does not cause interference to the first signal.

The following uses several examples to describe how a plurality of nodes implement multi-node quick measurement through time division multiplexing and avoid measurement interference.

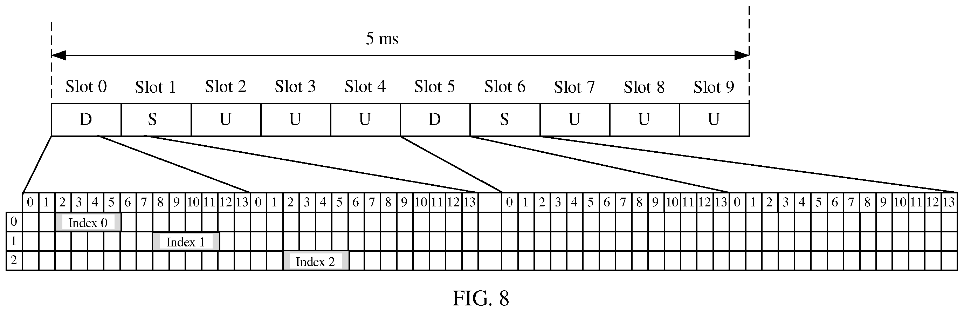

FIG. 8 is a diagram of an example in which SS/PBCH blocks are sent in a time division orthogonal manner according to an embodiment of this application. Using a 30 kHz SCS (the foregoing case C) as an example, in a scenario in which an operator spectrum frequency f <= 3 GHz, a position of a first symbol of a candidate SS/PBCH block in each half frame (5 ms) is {2, 8}+14*n, where n=0, 1. For example, a time division duplex (time division duplex, TDD) slot configuration is 2:3. When n=1, there are GAP symbols at corresponding symbol positions 8 to 11, and the symbol positions cannot be used to send an SS/PBCH block. To be specific, a downlink (downlink, D) slot supports two SS/PBCH blocks, and a special slot (S slot) supports one SS/PBCH block. Therefore, for a TDD uplink-downlink slot configuration 2:3, there are three SS/PBCH block candidate positions in total within 5 ms, that is, *Lₘₐₓ* = 3. Different nodes send SS/PBCH blocks in a time division orthogonal manner, and SS/PBCH block orthogonal resources may be allocated to three nodes every 5 ms. The slot configuration is a ratio of a quantity of downlink slots to a quantity of uplink slots, or a ratio of a sum of a quantity of downlink slots and a quantity of special slots to a quantity of uplink slots. For a slot configuration in the following, refer to this meaning.

The offset of the half frame in which the first resource position is located in the period of the SS/PBCH block is equal to $\left⌊identifier of the first node/{L}_{max}\right⌋$, where *Lₘₐₓ* = 3. If an identifier of a node 0 is 0, an offset of a half frame in which a resource position of the node 0 is located in the period of the SS/PBCH block is 0, that is, the half frame in which the resource position of the node 0 is located is a 0^{th} half frame in the period. If an identifier of a node 1 is 1, through a rounding down operation, an offset of a half frame in which a resource position of the node 1 is located in the period of the SS/PBCH block is 0, that is, the half frame in which the resource position of the node 1 is located is also the 0^{th} half frame in the period. If an identifier of a node 2 is 2, through a rounding down operation, an offset of a half frame in which a resource position of the node 2 is located in the period of the SS/PBCH block is 0, that is, the half frame in which the resource position of the node 2 is located is also the 0^{th} half frame in the period.

There are a total of three SS/PBCH block (SSB for short) candidate positions in the half frame. If the index of the SS/PBCH block in the half frame is equal to identifier of the first node%*Lₘₐₓ*, an index of an SS/PBCH block sent by the node 0 in the half frame is a 0^{th} SSB index, that is, an SSB index 0; an index of an SS/PBCH block sent by the node 1 in the half frame is a 1^{st} SSB index, that is, an SSB index 1; and an index of an SS/PBCH block sent by the node 2 in the half frame is a 2^{nd} SSB index, that is, an SSB index 2.

Therefore, the SS/PBCH block sent by the node 0 is at a position of the SSB index 0, the SS/PBCH block sent by the node 1 is at a position of the SSB index 1, and the SS/PBCH block sent by the node 2 is at a position of the SSB index 2.

In another example, assuming that the 30 kHz SCS (the foregoing case C), the operator spectrum frequency f <= 3 GHz, and the TDD slot configuration 2:3 are still used as an example, there are three SS/PBCH block candidate positions in total in one half frame. Assuming that a maximum quantity of nodes in a network is 12, the 12 nodes need to send SS/PBCH blocks in four half frames, and a period of sending an SS/PBCH block by each node is 20 ms.

According to a formula for calculating an offset of a half frame in which a resource position of a node is located in the period of the SS/PBCH block, an offset of a half frame in which resource positions of nodes 0, 1, and 2 are located in the period of the SS/PBCH block is 0, that is, the half frame in which the resource positions of the nodes 0, 1, and 2 are located is the 0^{th} half frame in the period; an offset of a half frame in which resource positions of nodes 3, 4, and 5 are located in the period of the SS/PBCH block is 1, that is, the half frame in which the resource positions of the nodes 3, 4, and 5 are located is the 1^{st} half frame in the period; an offset of a half frame in which resource positions of nodes 6, 7, and 8 are located in the period of the SS/PBCH block is 2, that is, the half frame in which the resource positions of the nodes 6, 7, and 8 are located is the 2^{nd} half frame in the period; and an offset of a half frame in which resource positions of nodes 9, 10, and 11 are located in the period of the SS/PBCH block is 3, that is, the half frame in which the resource positions of the nodes 9, 10, and 11 are located is the 3^{rd} half frame in the period.

According to a formula for calculating the index of the SS/PBCH block in the half frame, the nodes 0, 3, 6, and 9 each are at a 0^{th} SSB index, that is, an SSB index 0, in a respective half frame; the nodes 1, 4, 7, and 10 each are at a 1^{st} SSB index, that is, an SSB index 1, in a respective half frame; and the nodes 2, 5, 8, and 11 each are at a 2^{nd} SSB index, that is, an SSB index 2, in a respective half frame.

In this case, in the period of 20 ms:
The node 0, the node 1, and the node 2 respectively send SS/PBCH blocks at a position of the SSB index 0, a position of the SSB index 1, and a position of the SSB index 2 in the 0^{th} half frame.

The node 3, the node 4, and the node 5 respectively send SS/PBCH blocks at a position of the SSB index 0, a position of the SSB index 1, and a position of the SSB index 2 in the 1^{st} half frame.

The node 6, the node 7, and the node 8 respectively send SS/PBCH blocks at a position of the SSB index 0, a position of the SSB index 1, and a position of the SSB index 2 in the 2^{nd} half frame.

The node 9, the node 10, and the node 11 respectively send SS/PBCH blocks at a position of the SSB index 0, a position of the SSB index 1, and a position of the SSB index 2 in the 3^{rd} half frame.

In another example, assuming that the 30 kHz SCS (the foregoing case C), the operator spectrum frequency f <= 3 GHz, and the TDD slot configuration 2:3 are still used as an example, there are three SS/PBCH block candidate positions in total in one half frame. Assuming that a maximum quantity of nodes in a network is 96, the 96 nodes need to send SS/PBCH blocks in 32 half frames, and a period of sending an SS/PBCH block by each node is 160 ms.

According to a formula for calculating an offset of a half frame in which a resource position of a node is located in the period of the SS/PBCH block, an offset of a half frame in which resource positions of nodes 0, 1, and 2 are located in the period of the SS/PBCH block is 0, that is, the half frame in which the resource positions of the nodes 0, 1, and 2 are located is the 0^{th} half frame in the period; an offset of a half frame in which resource positions of nodes 3, 4, and 5 are located in the period of the SS/PBCH block is 1, that is, the half frame in which the resource positions of the nodes 3, 4, and 5 are located is the 1^{st} half frame in the period; an offset of a half frame in which resource positions of nodes 6, 7, and 8 are located in the period of the SS/PBCH block is 2, that is, the half frame in which the resource positions of the nodes 6, 7, and 8 are located is the 2^{nd} half frame in the period; an offset of a half frame in which resource positions of nodes 9, 10, and 11 are located in the period of the SS/PBCH block is 3, that is, the half frame in which the resource positions of the nodes 9, 10, and 11 are located is the 3^{rd} half frame in the period; and by analogy, an offset of a half frame in which resource positions of nodes 93, 94, and 95 are located in the period of the SS/PBCH block is 31, that is, the half frame in which the resource positions of the nodes 93, 94, and 95 are located is the 31^{st} half frame in the period.

According to a formula for calculating the index of the SS/PBCH block in the half frame, the nodes 0, 3, 6, 9, ..., and 93 each are at a 0^{th} SSB index, that is, an SSB index 0, in a respective half frame; the nodes 1, 4, 7, 10, ..., and 94 each are at a 1^{st} SSB index, that is, an SSB index 1, in a respective half frame; and the nodes 2, 5, 8, 11, ..., and 95 each are at a 2^{nd} SSB index, that is, an SSB index 2, in a respective half frame.

In this case, in the period of 160 ms:
The node 0, the node 1, and the node 2 respectively send SS/PBCH blocks at a position of the SSB index 0, a position of the SSB index 1, and a position of the SSB index 2 in the 0^{th} half frame.

The node 3, the node 4, and the node 5 respectively send SS/PBCH blocks at a position of the SSB index 0, a position of the SSB index 1, and a position of the SSB index 2 in the 1^{st} half frame.

The rest can be deduced by analogy.

The node 93, the node 94, and the node 95 respectively send SS/PBCH blocks at a position of the SSB index 0, a position of the SSB index 1, and a position of the SSB index 2 in the 31^{st} half frame.

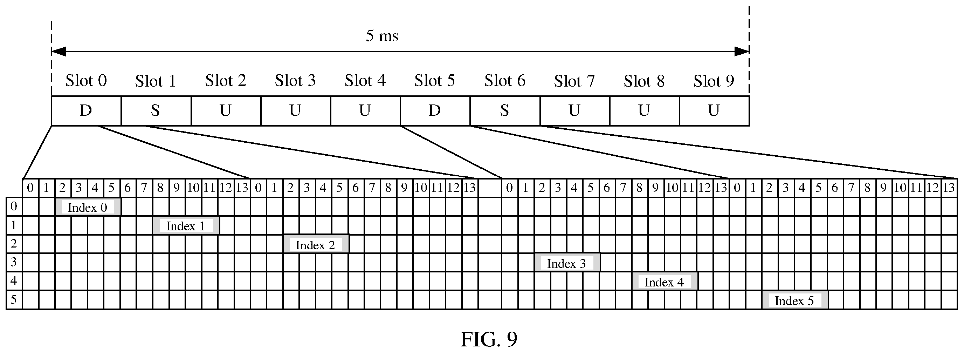

FIG. 9 is a diagram of another example in which SS/PBCH blocks are sent in a time division orthogonal manner according to an embodiment of this application. For a non-operator spectrum, using a 30 kHz SCS as an example, a position of a first symbol of a candidate SS/PBCH block in each half frame is {2, 8}+14*n, where n=0, 1, 2, 3, 4, 5, 6, 7, 8, 9. Similarly, a D slot supports two SS/PBCH blocks, and an S slot supports one SS/PBCH block. For a TDD uplink-downlink slot configuration 2:3, there are a maximum of six SSB candidate positions within 5 ms, that is, *Lₘₐₓ* = 6. If this SS/PBCH block format can be extended to support an operator spectrum, different nodes send SS/PBCH blocks in a time division orthogonal manner, and SS/PBCH block orthogonal resources may be allocated to six nodes every 5 ms.

The offset of the half frame in which the first resource position is located in the period of the SS/PBCH block is equal to $\left⌊identifier of the first node/{L}_{max}\right⌋$, where *Lₘₐₓ* = 6. If an identifier of a node 0 is 0, an offset of a half frame in which a resource position of the node 0 is located in the period of the SS/PBCH block is 0, that is, the half frame in which the resource position of the node 0 is located is a 0^{th} half frame in the period. If an identifier of a node 1 is 1, through a rounding down operation, an offset of a half frame in which a resource position of the node 1 is located in the period of the SS/PBCH block is 0, that is, the half frame in which the resource position of the node 1 is located is also the 0^{th} half frame in the period. If an identifier of a node 2 is 2, through a rounding down operation, an offset of a half frame in which a resource position of the node 2 is located in the period of the SS/PBCH block is 0, that is, the half frame in which the resource position of the node 2 is located is also the 0^{th} half frame in the period; and so on.

There are a total of six SS/PBCH block candidate positions in the half frame. If the index of the SS/PBCH block in the half frame is equal to identifier of the first *node%Lₘₐₓ,* an index of an SS/PBCH block sent by the node 0 in the half frame is a 0^{th} SSB index, that is, an SSB index 0; an index of an SS/PBCH block sent by the node 1 in the half frame is a 1^{st} SSB index, that is, an SSB index 1; an index of an SS/PBCH block sent by the node 2 in the half frame is a 2^{nd} SSB index, that is, an SSB index 2; and so on.

Therefore, the SS/PBCH block sent by the node 0 is at a position of the SSB index 0, the SS/PBCH block sent by the node 1 is at a position of the SSB index 1, the SS/PBCH block sent by the node 2 is at a position of the SSB index 2, and by analogy, the SS/PBCH block sent by the node 5 is at a position of the SSB index 5.

In another example, it is assumed that a current system is an operator spectrum, but a specification for a position of an SS/PBCH block on a non-operator spectrum in a protocol can be used. For example, a TDD slot configuration is 2:3, and an SCS is 30 kHz. In this case, there are a total of six SS/PBCH block candidate positions in one half frame. Assuming that a maximum quantity of nodes in a network is 12, the 12 nodes need to send SS/PBCH blocks in two half frames, and a period of sending an SS/PBCH block by each node is 10 ms.

According to a formula for calculating an offset of a half frame in which a resource position of a node is located in the period of the SS/PBCH block, an offset of a half frame in which resource positions of a node 0 to a node 5 are located in the period of the SS/PBCH block is 0, that is, the half frame in which the resource positions of the node 0 to the node 5 are located is the 0^{th} half frame in the period; and an offset of a half frame in which resource positions of a node 6 to a node 11 are located in the period of the SS/PBCH block is 1, that is, the half frame in which the resource positions of the node 6 to the node 11 are located is the 1^{st} half frame in the period.

According to a formula for calculating the index of the SS/PBCH block in the half frame, the node 0 and the node 6 each are at a 0^{th} SSB index, that is, an SSB index 0, in a respective half frame; the node 1 and the node 7 each are at a 1^{st} SSB index, that is, an SSB index 1, in a respective half frame; and so on.

In this case, in the period of 10 ms:
The node 0, the node 1, the node 2, the node 3, the node 4, and the node 5 respectively send SS/PBCH blocks at a position of the SSB index 0, a position of the SSB index 1, a position of the SSB index 2, a position of the SSB index 3, a position of the SSB index 4, and a position of the SSB index 5 in the 0^{th} half frame.

The node 6, the node 7, the node 8, the node 9, the node 10, and the node 11 respectively send SS/PBCH blocks at a position of the SSB index 0, a position of the SSB index 1, a position of the SSB index 2, a position of the SSB index 3, a position of the SSB index 4, and a position of the SSB index 5 in the 1^{st} half frame.

In another example, it is assumed that a current system is an operator spectrum, but a specification for a position of an SS/PBCH block on a non-operator spectrum in a protocol can be used. For example, a TDD slot configuration is 2:3, and an SCS is 30 kHz. In this case, there are a total of six SS/PBCH block candidate positions in one half frame. Assuming that a maximum quantity of nodes in a network is 96, the 96 nodes need to send SS/PBCH blocks in 16 half frames, and a period of sending an SS/PBCH block by each node is 80 ms.

According to a formula for calculating an offset of a half frame in which a resource position of a node is located in the period of the SS/PBCH block, an offset of a half frame in which resource positions of a node 0 to a node 5 are located in the period of the SS/PBCH block is 0, that is, the half frame in which the resource positions of the node 0 to the node 5 are located is the 0^{th} half frame in the period; an offset of a half frame in which resource positions of a node 6 to a node 11 are located in the period of the SS/PBCH block is 1, that is, the half frame in which the resource positions of the node 6 to the node 11 are located is the 1^{st} half frame in the period; and by analogy, an offset of a half frame in which resource positions of a node 90 to a node 95 are located in the period of the SS/PBCH block is 15, that is, the half frame in which the resource positions of the node 90 to the node 95 are located is the 15^{th} half frame in the period.

According to a formula for calculating the index of the SS/PBCH block in the half frame, the nodes 0, 6, ..., and 90 each are at a 0^{th} SSB index, that is, an SSB index 0, in a respective half frame; the nodes 1, 7, ..., and 91 each are at a 1^{st} SSB index, that is, an SSB index 1, in a respective half frame; the nodes 2, 8, ..., and 92 each are at a 2^{nd} SSB index, that is, an SSB index 2, in a respective half frame; and so on.

In this case, in the period of 80 ms:
The node 0, the node 1, the node 2, the node 3, the node 4, and the node 5 respectively send SS/PBCH blocks at a position of the SSB index 0, a position of the SSB index 1, a position of the SSB index 2, a position of the SSB index 3, a position of the SSB index 4, and a position of the SSB index 5 in the 0^{th} half frame.

The node 6, the node 7, the node 8, the node 9, the node 10, and the node 11 respectively send SS/PBCH blocks at a position of the SSB index 0, a position of the SSB index 1, a position of the SSB index 2, a position of the SSB index 3, a position of the SSB index 4, and a position of the SSB index 5 in the 1^{st} half frame.

The rest can be deduced by analogy.

The node 90, the node 91, the node 92, the node 93, the node 94, and the node 95 respectively send SS/PBCH blocks at a position of the SSB index 0, a position of the SSB index 1, a position of the SSB index 2, a position of the SSB index 3, a position of the SSB index 4, and a position of the SSB index 5 in the 15^{th} half frame.

It can be learned from the foregoing plurality of examples that, resource positions of the plurality of nodes are time division multiplexed, SS/PBCH blocks sent by different nodes are orthogonal in a time division manner, and time domain resource positions of the SS/PBCH blocks are associated with the identifiers of the nodes, so that signal interference from an adjacent node can be avoided during SS/PBCH block measurement, and measurement delays of the plurality of nodes can be reduced through time division multiplexing between the plurality of nodes.

According to the communication method provided in this embodiment of this application, the first resource position for the first node to send the first signal and the second resource position for the second node to send the second signal are time division multiplexed, the first resource position is associated with the identifier of the first node, and the second resource position is associated with the identifier of the second node, so that quick measurement of a plurality of nodes can be implemented and interference between signals can be avoided.

In another embodiment, the SS/PBCH block may be transmitted based on newly defined time domain patterns (that is, time domain patterns not included in the foregoing case A to case G). These newly defined time domain patterns may be as follows:
When the SCS is 15 kHz, a position of a first symbol in the candidate position of the SS/PBCH block within every 5 ms is {2, 6, 10}+14*n (n=0, 1, 2, 3, 4), or {4}+4*n (n=0, 1, 2, 3, 4, ..., 15), or {2}+4*n (n=0, 1, 2, 3, 4, ..., 16).
When the SCS is 30 kHz, a position of a first symbol in the candidate position of the SS/PBCH block within every 5 ms is {2, 6, 10}+14*n (n=0, 1, 2, 3, 4, 5, 6, 7, 8, 9), or {4}+4*n (n=0, 1, 2, 3, 4, ..., 33), or {2}+4*n (n=0, 1, 2, 3, 4, ..., 33).
When the SCS is 60 kHz, a position of a first symbol in the candidate position of the SS/PBCH block within every 5 ms is {2, 6, 10}+14*n (n=0, 1, 2, 3, 4, 5, 6, 7, 8, 9, 10, 11, 12, 13, 14, 15, 16, 17, 18, 19), or {4}+4*n (n=0, 1, 2, 3, 4, ..., 68), or {2}+4*n (n=0, 1, 2, 3, 4, ..., 68).
When the SCS is 120 kHz, a position of a first symbol in the candidate position of the SS/PBCH block within every 5 ms is {2, 6, 10}+14*n (n=0, 1, 2, 3, 4, ..., 39), or {4}+4*n (n=0, 1, 2, 3, 4, ..., 138), or {2}+4*n (n=0, 1, 2, 3, 4, ..., 138).
When the SCS is 240 kHz, a position of a first symbol in the candidate position of the SS/PBCH block within every 5 ms is {2, 6, 10}+14*n (n=0, 1, 2, 3, 4, ..., 79), or {4}+4*n (n=0, 1, 2, 3, 4, ..., 278), or {2}+4*n (n=0, 1, 2, 3, 4, ..., 278).
When the SCS is 480 kHz, a position of a first symbol in the candidate position of the SS/PBCH block within every 5 ms is {2, 6, 10}+14*n (n=0, 1, 2, 3, 4, ..., 159), or {4}+4*n (n=0, 1, 2, 3, 4, ..., 558), or {2}+4*n (n=0, 1, 2, 3, 4, ..., 558).
When the SCS is 960 kHz, a position of a first symbol in the candidate position of the SS/PBCH block within every 5 ms is {2, 6, 10}+14*n (n=0, 1, 2, 3, 4, ..., 319), or {4}+4*n (n=0, 1, 2, 3, 4, ..., 1118), or {2}+4*n (n=0, 1, 2, 3, 4, ..., 1118).

The time domain patterns of the SS/PBCH block are newly defined, so that more candidate positions of the SS/PBCH block can be supported in a half frame.

For a manner of determining a resource position of a node in a new time domain pattern, refer to the foregoing embodiment.

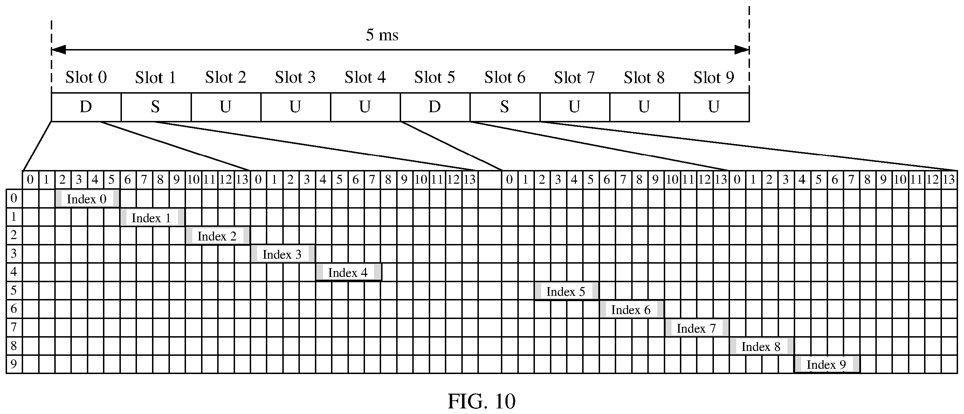

FIG. 10 is a diagram of another example in which SS/PBCH blocks are sent in a time division orthogonal manner according to an embodiment of this application. Using a 30 kHz SCS and a TDD slot configuration 2:3 as an example, a D slot supports three SS/PBCH blocks, and an S slot supports two SS/PBCH blocks. For the slot configuration 2:3, there are a total of 10 SS/PBCH block candidate positions within 5 ms, that is, SS/PBCH block orthogonal resources can be allocated to 10 nodes every 5 ms. For example, an SS/PBCH block sent by the node 0 is at a position of an SSB index 0, an SS/PBCH block sent by the node 1 is at a position of an SSB index 1, an SS/PBCH block sent by the node 2 is at a position of an SSB index 2, and by analogy, an SS/PBCH block sent by the node 9 is at a position of an SSB index 9.

For example, a maximum quantity of nodes in a network is 20. In this case, a period in which each node sends an SS/PBCH block is 10 ms. In other words, mutual measurement between 20 nodes can be supported within 10 ms. In the period of 10 ms:
The node 0, the node 1, ..., and the node 9 respectively send SS/PBCH blocks at a position of the SSB index 0, a position of the SSB index 1, ..., and a position of the SSB index 9 in the 0^{th} half frame.

The node 10, the node 11, ..., and the node 19 respectively send SS/PBCH blocks at a position of the SSB index 0, a position of the SSB index 1, ..., and a position of the SSB index 9 in the 1^{st} half frame.

For another example, a maximum quantity of nodes in a network is 160, and a period in which each node sends an SSB is 80 ms. In the period of 80 ms:

The node 0, the node 1, ..., and the node 9 respectively send SS/PBCH blocks at a position of the SSB index 0, a position of the SSB index 1, ..., and a position of the SSB index 9 in the 0^{th} half frame.

The node 10, the node 11, ..., and the node 19 respectively send SS/PBCH blocks at a position of the SSB index 0, a position of the SSB index 1, ..., and a position of the SSB index 9 in the 1^{st} half frame.

The rest can be deduced by analogy.

The node 150, the node 151, ..., and the node 159 respectively send SS/PBCH blocks at a position of the SSB index 0, a position of the SSB index 1, ..., and a position of the SSB index 9 in the 15^{th} half frame.

It can be learned from the foregoing plurality of examples that, resource positions of the plurality of nodes are time division multiplexed, SS/PBCH blocks sent by different nodes are orthogonal in a time division manner, and time domain resource positions of the SS/PBCH blocks are associated with the identifiers of the nodes, so that signal interference from an adjacent node can be avoided during SS/PBCH block measurement, and measurement delays of the plurality of nodes can be reduced through time division multiplexing between the plurality of nodes.

New time domain patterns are designed, so that more SS/PBCH block candidate positions can be supported in each half frame, thereby further reducing measurement delays of a plurality of nodes.

In the descriptions in the foregoing embodiment, time division multiplexing is performed between a plurality of nodes, and only one node sends an SS/PBCH block at one SS/PBCH block candidate position in a system bandwidth. In the descriptions in the following embodiment, a plurality of nodes may perform frequency division multiplexing at one SS/PBCH block candidate position in a system bandwidth, to support more SS/PBCH block candidate positions, and further reduce measurement delays of the plurality of nodes.

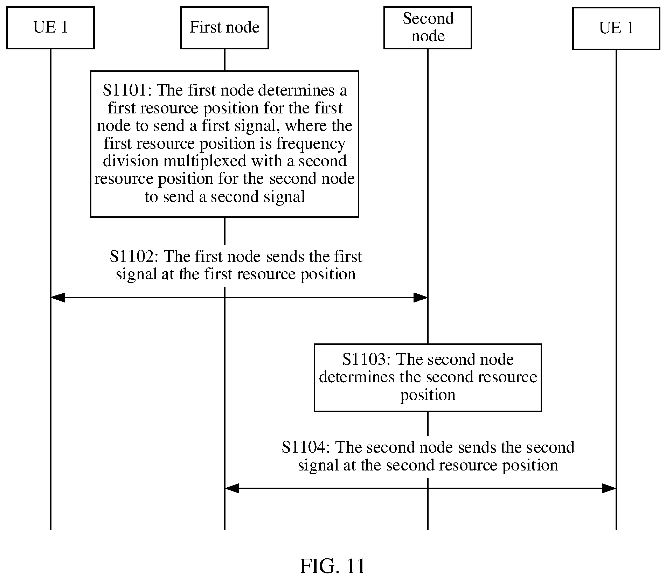

FIG. 11 is a schematic flowchart of another communication method according to an embodiment of this application. For example, the method may include the following steps.

S1101: A first node determines a first resource position for the first node to send a first signal.

In this embodiment, an example in which the first signal and a second signal are SS/PBCH blocks is used for description. The first signal or the second signal may alternatively be another signal, as described in the foregoing embodiment. This is not limited in this embodiment of this application.

A specific system bandwidth is configured for a network, and frequency division orthogonality of SS/PBCH blocks of a plurality of nodes is supported in the system bandwidth, to improve frequency domain resource utilization. Therefore, in this embodiment, different nodes may send SS/PBCH blocks in a frequency division orthogonal manner, and each SS/PBCH block occupies a specific frequency domain resource (for example, 20 RBs). In addition, due to a half-duplex limitation, if different nodes send SS/PBCH blocks at a same time domain position and different frequency domain positions, it is possible that these nodes cannot measure each other. Therefore, in one period of the SS/PBCH block, the SS/PBCH block may be sent in time domain by changing different node combinations, that is, the node sends the SS/PBCH block a plurality of times in one period of the SS/PBCH block, so that the node can measure an SS/PBCH block sent by another node.

The first resource position is associated with an offset of a half frame in which the first resource position is located in the period of the SS/PBCH block and an index of the SS/PBCH block in the half frame. One period includes at least one half frame.

Further, the offset of the half frame in which the first resource position is located in the period of the SS/PBCH block is associated with an identifier of the first node, a first parameter, a second parameter, a quantity of times that the currently sent SS/PBCH block has been repeatedly sent in the period, and a quantity *Lₘₐₓ* of candidate positions of the SS/PBCH block in the half frame. For example, the offset of the half frame in which the first resource position is located in the period of the SS/PBCH block, the identifier of the first node, the first parameter, the second parameter, the quantity of times that the currently sent SS/PBCH block has been repeatedly sent in the period, and the quantity *Lₘₐₓ* of candidate positions of the SS/PBCH block in the half frame satisfy a third function relationship. For example, the offset of the half frame in which the first resource position is located in the period of the SS/PBCH block is equal to $\left[\left(identifier of the first node+r-1\right){%N}_{cell}+\left(r-1\right)\times \left⌈{N}_{cell}/{N}_{f , cell}\right⌉\times {N}_{f , cell}\right] /$ $\left({N}_{f , cell}\times {L}_{max}\right)$ or $\left[\left(identifier of the first node+m+r-1\right){%N}_{cell}+\left(r-\right.\right.$ $\left.\left.1\right)\times \left⌈{N}_{cell}/{N}_{f , cell}\right⌉\times {N}_{f , cell}\right] / \left({N}_{f , cell}\times {L}_{max}\right)$*,* that is, an offset m is added to each node identifier, where m is a natural number or an integer. *r* is the quantity of times that the currently sent SS/PBCH block has been repeatedly sent in the period of the SS/PBCH block; *N_{cell}* is a total quantity of nodes, that is, the first parameter; *N_{f,cell}* is a quantity of nodes that support orthogonality in frequency domain, that is, the second parameter; and *Lₘₐₓ* is the quantity of candidate positions of the SS/PBCH block in the half frame. For example, *Lₘₐₓ* is determined based on a time domain position of the SS/PBCH block defined in a protocol, a subframe format configured in a current system, or an uplink-downlink configuration configured in a current system; or is a predefined or configured value. / represents division, % represents a modulo operation, └ ┘ represents rounding down, and ┌ ┐ represents rounding up. (*identifier of the first node* + *m* + *r -* 1)%*N_{cell}* may be replaced with (*identifier of the first node* - *m* + *r -* 1)%*N_{cell},* that is, an offset m is subtracted from each node identifier, where m is a natural number or an integer.

The index of the SS/PBCH block in the half frame is associated with the identifier of the first node, the first parameter, the second parameter, the quantity of times that the currently sent SS/PBCH block has been repeatedly sent in the period, and the quantity *Lₘₐₓ* of candidate positions of the SS/PBCH block in the half frame. For example, *Lₘₐₓ* is determined based on a time domain position of the SS/PBCH block defined in a protocol, a subframe format configured in a current system, or an uplink-downlink configuration configured in a current system; or is a predefined or configured value. For example, the index of the SS/PBCH block in the half frame, the identifier of the first node, the first parameter, the second parameter, the quantity of times that the currently sent SS/PBCH block has been repeatedly sent in the period, and the quantity *Lₘₐₓ* of candidate positions of the SS/PBCH block in the half frame satisfy a fourth function relationship. For example, the index of the SS/PBCH block in the half frame is equal to $\left[\left(identifier of the first node+r-1\right){%N}_{cell}+\left(r-1\right)\times \left⌈{N}_{cell}/{N}_{f , cell}\right⌉\times {N}_{f , cell}\right] /$ ${N}_{f , cell} {%L}_{max}$ or $\left[\left(identifier of the first node+m+r-1\right){%N}_{cell}+\left(r-1\right)\times \right.$ $\left.\left⌈{N}_{cell}/{N}_{f , cell}\right⌉\times {N}_{f , cell}\right] / {N}_{f , cell} {%L}_{max}$*,* that is, an offset m is added to each node identifier, where m is a natural number or an integer. *r* is the quantity of times that the currently sent SS/PBCH block has been repeatedly sent in the period; *N_{cell}* is a total quantity of nodes, that is, the first parameter; *N_{f,cell}* is a quantity of nodes that support orthogonality in frequency domain, that is, the second parameter; and *Lₘₐₓ* is the quantity of candidate positions of the SS/PBCH block in the half frame. % represents a modulo operation, └ ┘ represents rounding down, and ┌ ┐ represents rounding up. (*identifier of the first node + m* + *r* - 1)%*N_{cell}* may be replaced with (*identifier of the first node* - *m* + *r -* 1)%*N_{cell},* that is, an offset m is subtracted from each node identifier, where m is a natural number or an integer.

For example, the first parameter may be predefined, or preconfigured, or based on a predefined or preconfigured third parameter; and the second parameter is predefined, or preconfigured, or based on a predefined or preconfigured fourth parameter. Optionally, the third parameter is a largest value in preconfigured physical cell identifiers. Optionally, the fourth parameter is a preconfigured system bandwidth.

For example, the identifier of the first node may be a node identifier or a PCI.

In the foregoing example, a center frequency position of the SS/PBCH block depends on the identifier of the first node, and is $\left⌊\left[\left(identifier of the first node+r-1\right){%N}_{cell}\right]{%N}_{f , cell}\right⌋$ .

Further, for a CU-DU separated network architecture, a CU may send configuration information of the first resource position to a DU by using an F1-AP message. The configuration information may include the offset of the half frame in which the first resource position is located in the period of the SS/PBCH block and the index of the SS/PBCH block in the half frame. In this configuration, there is a mapping relationship between an identifier of a node and an offset of a half frame in which a resource position of the node is located in a period of an SS/PBCH block, an index of the SS/PBCH block in the half frame, and a center frequency position of the SS/PBCH block.

S1102: The first node sends the first signal at the first resource position.

UE 1 served by the first node receives the first signal at the first resource position.

S1103: A second node determines a second resource position.

S1104: The second node sends a second signal at the second resource position.

UE 2 served by the second node receives the second signal at the second resource position.

The second resource position and the first resource position are frequency division orthogonal.

The following uses several examples to describe how a plurality of nodes implement multi-node quick measurement through frequency division multiplexing and avoid measurement interference.

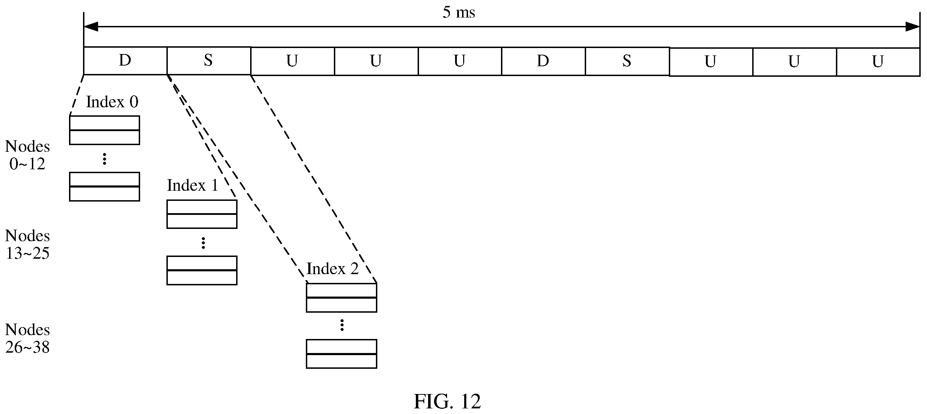

FIG. 12 is a diagram of an example in which SS/PBCH blocks are sent in a frequency division orthogonal manner according to an embodiment of this application. Using a 100M system bandwidth as an example, frequency division orthogonal sending of SS/PBCH blocks of a maximum of 13 nodes is supported in the 100M system bandwidth. In time domain, a format of the SS/PBCH block uses the time domain pattern in the foregoing case A to case G. For an operator spectrum frequency f <= 3 GHz, using a 30 kHz SCS as an example, a position of a first symbol in the candidate position of the SS/PBCH block within every 5 ms is {2, 8}+14*n, where n=0, 1. For a TDD slot configuration 2:3, there are three SS/PBCH block candidate positions every 5 ms. In an SS/PBCH block frequency division orthogonal solution, each of 39 nodes can send an SSB once within 5 ms.

In the foregoing manner of determining the offset of the half frame in which the resource position of the node is located in the period of the SS/PBCH block and the index of the SS/PBCH block in the half frame, it can be learned that an SS/PBCH block sent by a node 0 is at a position of *f*₀ in frequency domain and an SSB index 0 in time domain; an SS/PBCH block sent by a node 1 is at a position of *f*₁ in frequency domain and an SSB index 0 in time domain; by analogy, an SS/PBCH block sent by a node 12 is at a position of *f₁₂* in frequency domain and an SSB index 0 in time domain; an SS/PBCH block sent by a node 13 is at a position of *f*₀ in frequency domain and an SSB index 1 in time domain; an SS/PBCH block sent by a node 14 is at a position of *f*₁ in frequency domain and an SSB index 1 in time domain; by analogy, an SS/PBCH block sent by a node 25 is at a position of *f*₁₂ in frequency domain and an SSB index 1 in time domain; an SS/PBCH block sent by a node 26 is at a position of *f*₀ in frequency domain and an SSB index 2 in time domain; an SS/PBCH block sent by a node 27 is at a position of *f*₁ in frequency domain and an SSB index 2 in time domain; and by analogy, an SS/PBCH block sent by a node 38 is at a position of *f*₁₂ in frequency domain and an SSB index 2 in time domain.

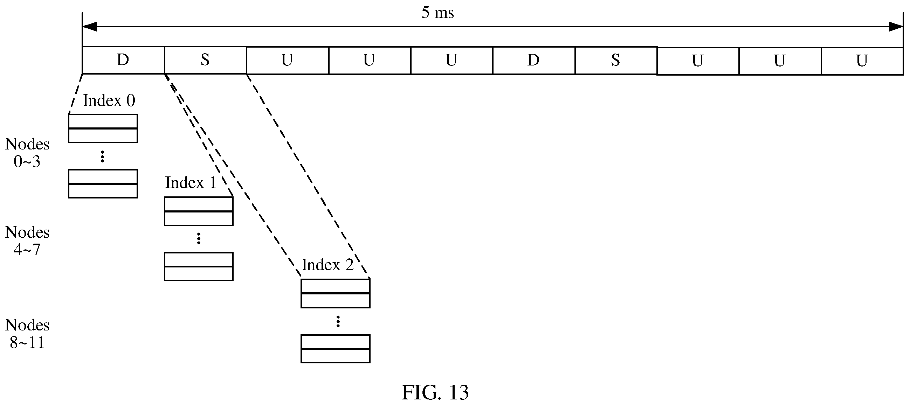

FIG. 13 is a diagram of another example in which SS/PBCH blocks are sent in a frequency division orthogonal manner according to an embodiment of this application. A 30 kHz SCS is used as an example. Assuming that frequency division orthogonal sending of four SS/PBCH blocks is supported in a system bandwidth, and three SS/PBCH block candidate positions are included within 5 ms, 12 nodes each are supported to send an SS/PBCH block once within 5 ms.

Because the node 0 to the node 3 are frequency division orthogonal, the node 4 to the node 7 are frequency division orthogonal, and the node 8 to the node 11 are frequency division orthogonal, the node 0 to the node 3 cannot measure each other, the node 4 to the node 7 cannot measure each other, and the node 8 to the node 11 cannot measure each other. In this case, different node combinations need to be changed in time domain to send SS/PBCH blocks. The node combination change is shown in the following Table 1:

**Table 1: Node combination table**

| Offset of a half frame in which a node resource position is located in a period of an SS/PBCH block | | SSB index 0 | SSB index 1 | SSB index 2 |
|---|---|---|---|---|
| | 0 | Nodes 0~3 | Nodes 4~7 | Nodes 8~11 |
| | 1 | Nodes 11~2 | Nodes 3~6 | Nodes 7~10 |
| | 2 | Nodes 10~1 | Nodes 2~5 | Nodes 6~9 |
| | 3 | Nodes 9~0 | Nodes 1~4 | Nodes 5~8 |

That is, the period of the SS/PBCH block is configured to be 20 ms, including four half frames. Within the 20 ms, time-frequency domain positions for sending SS/PBCH blocks by the nodes are staggered based on identifiers of the nodes: The offset of the half frame in which the node resource position is located in the period of the SS/PBCH block is (*r* - 1), where *r*=1, 2, 3, 4; an index of the SS/PBCH block in the half frame is $\left⌊\left[\left(PCI+r-1\right)%12+\left(r-1\right)\times 12\right]/4\right⌋ % 3$ , where *r*=1, 2, 3, 4; and a center frequency position of each SS/PBCH block is $\left⌊\left[\left(PCI+r-1\right)%12\right]%4\right⌋$, where *r*=1, 2, 3, 4. Specifically, the node 0 to the node 3 send SS/PBCH blocks at the SSB index 0 in the 0^{th} half frame, the node 4 to the node 7 send SS/PBCH blocks at the SSB index 1 in the 0^{th} half frame, and the node 8 to the node 11 send SS/PBCH blocks at the SSB index 2 in the 0^{th} half frame. The node 11 to the node 2 send SS/PBCH blocks at the SSB index 0 in the 1^{st} half frame, the node 3 to the node 6 send SS/PBCH blocks at the SSB index 1 in the 1^{st} half frame, and the node 7 to the node 10 send SS/PBCH blocks at the SSB index 2 in the 1^{st} half frame. The node 10 to the node 1 send SS/PBCH blocks at the SSB index 0 in the 2^{nd} half frame, the node 2 to the node 5 send SS/PBCH blocks at the SSB index 1 in the 2^{nd} half frame, and the node 6 to the node 9 send SS/PBCH blocks at the SSB index 2 in the 2^{nd} half frame. The node 9 to the node 0 send SS/PBCH blocks at the SSB index 0 in the 3^{rd} half frame, the node 1 to the node 4 send SS/PBCH blocks at the SSB index 1 in the 3^{rd} half frame, and the node 5 to the node 8 send SS/PBCH blocks at the SSB index 2 in the 3^{rd} half frame. Therefore, the 12 nodes can complete mutual measurement within 20 ms.

It can be learned from the foregoing table that, in different half frames in a period, at least one different node exists in a plurality of nodes that perform frequency division multiplexing with the node 3. For example, in the 0^{th} half frame, the node 0 to the node 2 perform frequency division multiplexing with the node 3. Because the node 0 to the node 2 perform frequency division multiplexing with the node 3, assuming that the node 0 to the node 2 work in a half-duplex mode, the node 0 to the node 2 cannot receive the SS/PBCH block sent by the node 3. In the 1^{st} half frame, the node 3 sends the SS/PBCH block at the SSB index 1 again, and the node 0 to the node 2 perform time division multiplexing with the node 3, so that the node 0 to the node 2 can receive the SS/PBCH block sent by the node 3. In this way, a problem that nodes cannot measure each other in a multi-node networking scenario can be avoided.

In addition, the 12 nodes may complete cell search in the 0^{th} half frame, and cell search is completed without considering a problem that the nodes cannot measure each other.

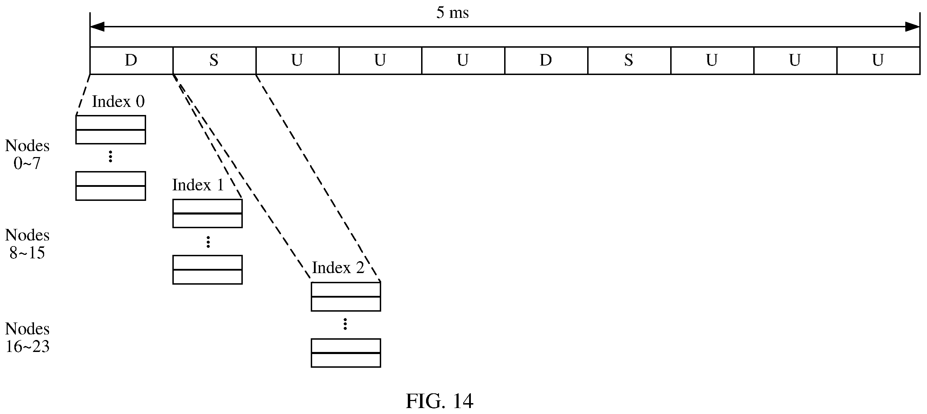

FIG. 14 is a diagram of another example in which SS/PBCH blocks are sent in a frequency division orthogonal manner according to an embodiment of this application. A 30 kHz SCS is used as an example. Assuming that frequency division orthogonal sending of eight SS/PBCH blocks is supported in a system bandwidth, and three SS/PBCH block candidate positions are included within 5 ms, 48 nodes each are supported to send an SS/PBCH block once within 10 ms.

In the 0^{th} half frame, the node 0 to the node 7 perform frequency division multiplexing, the node 8 to the node 15 perform frequency division multiplexing, and the node 16 to the node 23 perform frequency division multiplexing. In the 1^{st} half frame, the node 24 to the node 31 perform frequency division multiplexing, the node 32 to the node 39 perform frequency division multiplexing, and the node 40 to the node 47 perform frequency division multiplexing. Therefore, in the 0^{th} half frame, the node 0 to the node 7 cannot measure each other, the node 8 to the node 15 cannot measure each other, and the node 16 to the node 23 cannot measure each other; and in the 1^{st} half frame, the node 24 to the node 31 cannot measure each other, the node 32 to the node 39 cannot measure each other, and the node 40 to the node 47 cannot measure each other. Therefore, different node combinations need to be changed in time domain to send SS/PBCH blocks. The node combination change is shown in the following Table 2:

**Table 2: Node combination table**

| Offset of a half frame in which a node resource position is located in a period of an SS/PBCH block | | SSB index 0 | SSB index 1 | SSB index 2 |
|---|---|---|---|---|
| | 0 | Nodes 0~7 | Nodes 8~15 | Nodes 16~23 |
| | 1 | Nodes 24~31 | Nodes 32~39 | Nodes 40~47 |
| | 2 | Nodes 47~6 | Nodes 7~14 | Nodes 15~22 |
| | 3 | Nodes 23~30 | Nodes 31~38 | Nodes 39~46 |
| | 4 | Nodes 46~5 | Nodes 6~13 | Nodes 14~21 |
| | 5 | Nodes 22~29 | Nodes 30~37 | Nodes 38~45 |
| | 6 | Nodes 45~4 | Nodes 5~12 | Nodes 13~20 |
| | 7 | Nodes 21~28 | Nodes 29~36 | Nodes 37~44 |
| | 8 | Nodes 44~3 | Nodes 4~11 | Nodes 12~19 |
| | 9 | Nodes 20~27 | Nodes 28~35 | Nodes 36~43 |
| | 10 | Nodes 43~2 | Nodes 3~10 | Nodes 11~18 |
| | 11 | Nodes 19~26 | Nodes 27~34 | Nodes 35~42 |
| | 12 | Nodes 42~1 | Nodes 2~9 | Nodes 10~17 |
| | 13 | Nodes 18~25 | Nodes 26~33 | Nodes 34~41 |
| | 14 | Nodes 41~0 | Nodes 1~8 | Nodes 9~16 |
| | 15 | Nodes 17~24 | Nodes 25~32 | Nodes 33~40 |

That is, the period of the SS/PBCH block is configured to be 80 ms, including 16 half frames. Within the 80 ms, time-frequency domain positions for sending SS/PBCH blocks by the nodes are staggered based on identifiers of the nodes: The offset of the half frame in which the node resource position is located in the period of the SS/PBCH block is $\left⌊\left[\left(PCI+r-1\right)%48+\left(r-1\right)\times 48\right]/24\right⌋$ , where *r*=*1*, *2, ..., 8*; an index of the SS/PBCH block in the half frame is $\left⌊\left[\left(PCI+r-1\right)%48+\left(r-1\right)\times 48\right]/8\right⌋ % 3$, where *r=1, 2,* ..., *8*; and a center frequency position of each SS/PBCH block is $\left⌊\left[\left(PCI+r-1\right)%48\right]%8\right⌋$, where *r=1, 2,* ..., *8*. Specifically, the node 0 to the node 7 send SS/PBCH blocks at the SSB index 0 in the 0^{th} half frame, the node 8 to the node 15 send SS/PBCH blocks at the SSB index 1 in the 0^{th} half frame, and the node 16 to the node 23 send SS/PBCH blocks at the SSB index 2 in the 0^{th} half frame. The node 24 to the node 31 send SS/PBCH blocks at the SSB index 0 in the 1^{st} half frame, the node 32 to the node 39 send SS/PBCH blocks at the SSB index 1 in the 1^{st} half frame, and the node 40 to the node 47 send SS/PBCH blocks at the SSB index 2 in the 1^{st} half frame. The node 47 to the node 6 send SS/PBCH blocks at the SSB index 0 in the 2^{nd} half frame, the node 7 to the node 14 send SS/PBCH blocks at the SSB index 1 in the 2^{nd} half frame, and the node 15 to the node 22 send SS/PBCH blocks at the SSB index 2 in the 2^{nd} half frame; and so on. Therefore, the 48 nodes can complete mutual measurement within 80 ms.

In addition, the 48 nodes may complete cell search in the 0^{th} half frame and the 1^{st} half frame, completion of cell search takes only 10 ms, and cell search is performed without considering a problem that the nodes cannot measure each other.

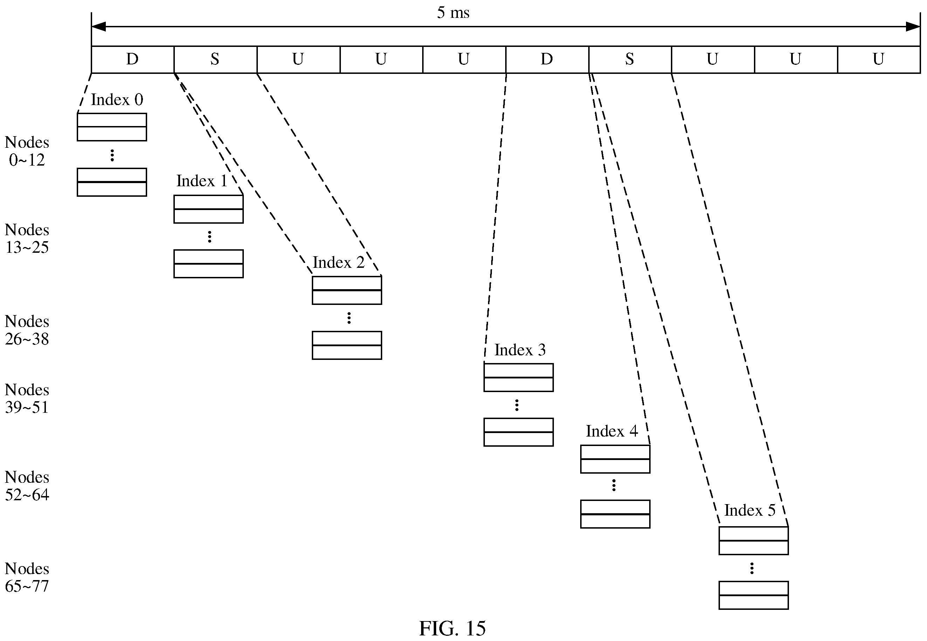

FIG. 15 is a diagram of another example in which SS/PBCH blocks are sent in a frequency division orthogonal manner according to an embodiment of this application. Using a 30 kHz SCS as an example, for a non-operator spectrum, a position of a first symbol in a candidate position of an SS/PBCH block within every 5 ms is {2,8} + 14 · *n. n =* 0, 1, 2, 3, 4, 5, 6, 7, 8, 9. Similarly, a D slot supports two SSBs, an S slot supports one SSB, and there are a maximum of six SSB candidate positions within 5 ms for a slot configuration 2:3. If such an SS/PBCH block format can be extended to support an operator spectrum, in an SS/PBCH block frequency division orthogonal solution, 78 nodes each can send an SSB once within 5 ms. As shown in FIG. 15, an SS/PBCH block sent by a node 0 is at a position of *f*₀ in frequency domain and an SSB index 0 in time domain; an SS/PBCH block sent by a node 1 is at a position of *f*₁ in frequency domain and an SSB index 0 in time domain; by analogy, an SS/PBCH block sent by a node 12 is at a position of f₁₂ in frequency domain and an SSB index 0 in time domain; an SS/PBCH block sent by a node 13 is at a position of *f*₀ in frequency domain and an SSB index 1 in time domain; an SS/PBCH block sent by a node 14 is at a position of *f*₁ in frequency domain and an SSB index 1 in time domain; by analogy, an SS/PBCH block sent by a node 25 is at a position of *f*₁₂ in frequency domain and an SSB index 1 in time domain; an SS/PBCH block sent by a node 26 is at a position of *f*₀ in frequency domain and an SSB index 2 in time domain; an SS/PBCH block sent by a node 27 is at a position of *f*₁ in frequency domain and an SSB index 2 in time domain; and by analogy, an SS/PBCH block sent by a node 77 is at a position of *f*₁₂ in frequency domain and an SSB index 5 in time domain.

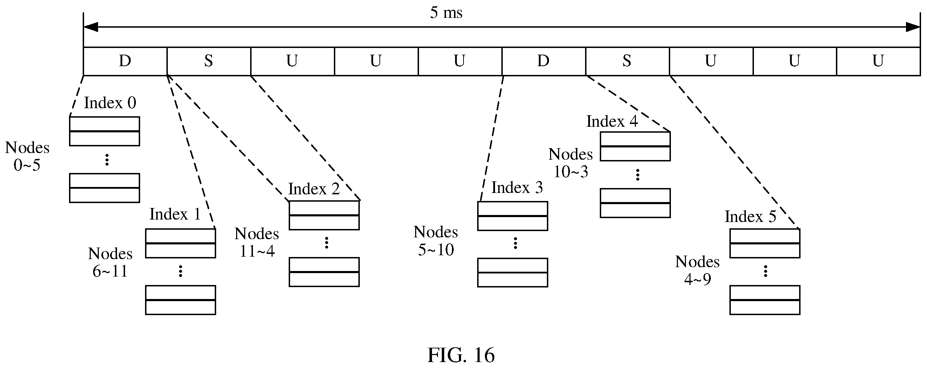

FIG. 16 is a diagram of another example in which SS/PBCH blocks are sent in a frequency division orthogonal manner according to an embodiment of this application. Assuming that frequency division orthogonal sending of six SS/PBCH blocks is supported in a system bandwidth, 12 nodes each are supported to send an SS/PBCH block three times within 5 ms.

When the SS/PBCH block is sent for the first time, the node 0 to the node 5 perform frequency division multiplexing, and the node 6 to the node 11 perform frequency division multiplexing. Therefore, the node 0 to the node 5 cannot measure each other, and the node 6 to the node 11 cannot measure each other. To support mutual measurement between every two nodes, different node combinations need to be changed in time domain to send SS/PBCH blocks at a same time domain position. A node combination change method is shown in Table 3.

**Table 3: Node combination table**

| Offset of a half frame in which a node resource position is located in a period of an SS/PBCH block | SSB index 0 | SSB index 1 | SSB index 2 | SSB index 3 | SSB index 4 | SSB index 5 |
|---|---|---|---|---|---|---|
| 0 | Nodes 0~5 | Nodes 6~11 | Nodes 11~4 | Nodes 5~10 | Nodes 10~3 | Nodes 4~9 |
| 1 | Nodes 9~2 | Nodes 3~8 | Nodes 8~1 | Nodes 2~7 | Nodes 7~0 | Nodes 1~6 |

That is, the period of the SS/PBCH block is configured to be 10 ms, including two half frames. FIG. 16 is a diagram of only an example in which SS/PBCH blocks are sent in a frequency division orthogonal manner within 5 ms. Within the 10 ms, time-frequency domain positions for sending SS/PBCH blocks by the nodes are staggered based on identifiers of the nodes: The offset of the half frame in which the node resource position is located in the period of the SS/PBCH block is $\left⌊\left[\left(PCI+r-1\right)%12+\left(r-1\right)\times 12\right]/36\right⌋$, where *r*=1, 2, ..., 6; an index of the SS/PBCH block in the half frame is $\left⌊\left[\left(PCI+r-1\right)%12+\left(r-1\right)\times 12\right]/6\right⌋ % 6$; and a center frequency position of each SS/PBCH block is $\left⌊\left[\left(PCI+r-1\right)%12\right]%6\right⌋$. Specifically, the node 0 to the node 5 send SS/PBCH blocks at the SSB index 0 in the 0^{th} half frame, the node 6 to the node 11 send SS/PBCH blocks at the SSB index 1 in the 0^{th} half frame, the node 11 to the node 4 send SS/PBCH blocks at the SSB index 2 in the 0^{th} half frame, the node 5 to the node 10 send SS/PBCH blocks at the SSB index 3 in the 0^{th} half frame, the node 10 to the node 3 send SS/PBCH blocks at the SSB index 4 in the 0^{th} half frame, and the node 4 to the node 9 send SS/PBCH blocks at the SSB index 5 in the 0^{th} half frame. The node 9 to the node 2 send SS/PBCH blocks at the SSB index 0 in the 1^{st} half frame, the node 3 to the node 8 send SS/PBCH blocks at the SSB index 1 in the 1^{st} half frame, the node 8 to the node 1 send SS/PBCH blocks at the SSB index 2 in the 1^{st} half frame, the node 2 to the node 7 send SS/PBCH blocks at the SSB index 3 in the 1^{st} half frame, the node 7 to the node 0 send SS/PBCH blocks at the SSB index 4 in the 1^{st} half frame, and the node 1 to the node 6 send SS/PBCH blocks at the SSB index 5 in the 1^{st} half frame. Therefore, mutual measurement between 12 nodes can be supported.

In addition, the 12 nodes may complete cell search in the 0^{th} half frame, and completion of cell search takes only 5 ms.

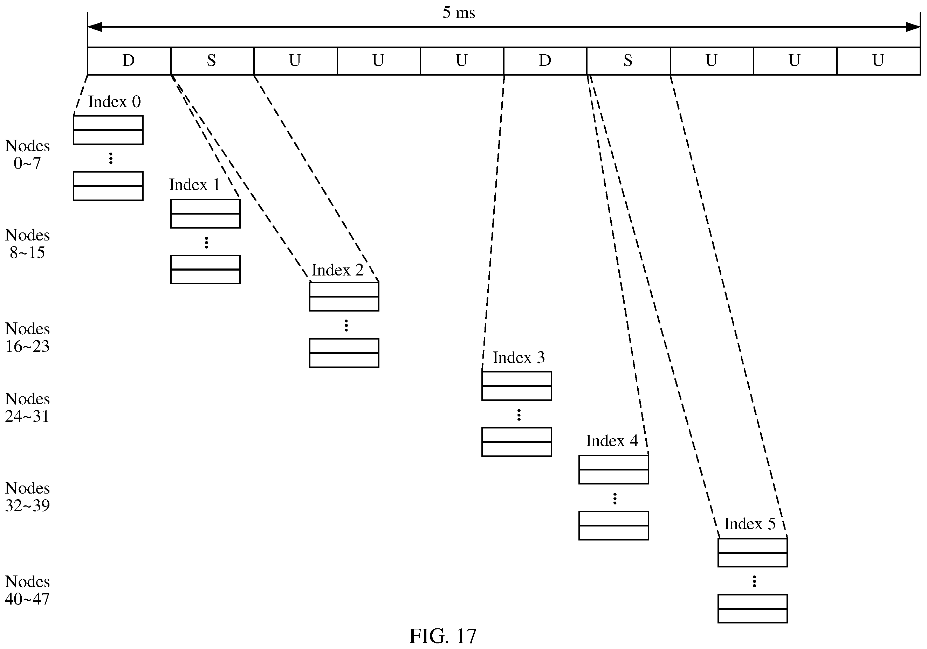

FIG. 17 is a diagram of another example in which SS/PBCH blocks are sent in a frequency division orthogonal manner according to an embodiment of this application. A 30 kHz SCS is used as an example. A position of a first symbol in a candidate position of an SS/PBCH block within every 5 ms is {2,8} + 14 · *n. n* = 0, 1, 2, 3, 4, 5, 6, 7, 8, 9. Assuming that frequency division orthogonal sending of eight SS/PBCH blocks is supported in a system bandwidth, 96 nodes each are supported to send an SS/PBCH block once within 10 ms. FIG. 17 is a diagram of an example of frequency division orthogonality of 48 nodes within 5 ms, and frequency division orthogonality of other nodes can be deduced by analogy.

When the SS/PBCH block is sent for the first time, the node 0 to the node 7 cannot measure each other (other nodes have a similar problem). Therefore, different node combinations need to be changed in time domain to send SS/PBCH blocks at a same time domain position. A node combination change method is shown in Table 4.

**Table 4: Node combination table**

| Offset of a half frame in which a node resource position is located in a period of an SS/PBCH block | SSB index 0 | SSB index 1 | SSB index 2 | SSB index 3 | SSB index 4 | SSB index 5 |
|---|---|---|---|---|---|---|
| 0 | 0~7 | 8~15 | 16~23 | 24~31 | 32~39 | 40~47 |
| 1 | 48~55 | 56~63 | 64~71 | 72~79 | 80~87 | 88~95 |
| 2 | 95~6 | 7~14 | 15~22 | 23~30 | 31~38 | 39~46 |
| 3 | 47~54 | 55~62 | 63~70 | 71~78 | 79~86 | 87~94 |
| 4 | 94~5 | 6~13 | 14~21 | 22~29 | 30~37 | 38~45 |
| 5 | 46~53 | 54~61 | 62~69 | 70~77 | 78~85 | 86~93 |
| 6 | 93~4 | 5~12 | 13~20 | 21~28 | 29~36 | 37~44 |
| 7 | 45~52 | 53~60 | 61~68 | 69~76 | 77~84 | 85~92 |
| 8 | 92~3 | 4~11 | 12~19 | 20~27 | 28~35 | 36~43 |
| 9 | 44~51 | 52~59 | 60~67 | 68~75 | 76~83 | 84~91 |
| 10 | 91~2 | 3~10 | 11~18 | 19~26 | 27~34 | 35~42 |
| 11 | 43~50 | 51~58 | 59~66 | 67~74 | 75~82 | 83~90 |
| 12 | 90~1 | 2~9 | 10~17 | 18~25 | 26~33 | 34~41 |
| 13 | 42~49 | 50~57 | 58~65 | 66~73 | 74~81 | 82~89 |
| 14 | 89~0 | 1~8 | 9~16 | 17~24 | 25~32 | 33~40 |
| 15 | 41~48 | 49~56 | 57~64 | 65~72 | 73~80 | 81~88 |

That is, the period of the SS/PBCH block is configured to be 80 ms, including 16 half frames. Within the 80 ms, time-frequency domain positions for sending SS/PBCH blocks by the nodes are staggered based on identifiers of the nodes: The offset of the half frame in which the node resource position is located in the period of the SS/PBCH block is $\left⌊\left[\left(PCI+r-1\right)%96+\left(r-1\right)\times 96\right]/48\right⌋$ , where *r*=1, 2, ..., 8; an index of the SS/PBCH block in the half frame is $\left⌊\left[\left(PCI+r-1\right)%96+\left(r-1\right)\times 96\right]/8\right⌋ % 6$; and a center frequency position of each SS/PBCH block is $\left⌊\left[\left(PCI+r-1\right)%96\right]%8\right⌋$. Therefore, mutual measurement between 96 nodes can be supported.

In addition, the 96 nodes may complete cell search in the 0^{th} half frame and the 1^{st} half frame, and completion of cell search takes only 10 ms.

It can be learned from the foregoing example that, frequency division multiplexing is performed between resource positions of nodes, and different node combinations are changed in time domain to send SS/PBCH blocks at a same time domain position, so that more SS/PBCH block candidate positions can be supported, quick measurement of a plurality of nodes can be implemented, and interference between signals can be avoided.

According to the communication method provided in this embodiment of this application, the first resource position for the first node to send the first signal and the second resource position for the second node to send the second signal are frequency division multiplexed, the first resource position is associated with the identifier of the first node, and the second resource position is associated with the identifier of the second node, so that fast measurement of a plurality of nodes can be implemented and interference between signals can be avoided.

The foregoing embodiments separately describe solutions of time division multiplexing and frequency division multiplexing between a plurality of nodes. In the descriptions of the following embodiments, time-frequency division multiplexing may be performed between a plurality of nodes, to further reduce a measurement delay between the plurality of nodes and avoid interference between signals.

The first signal, the second signal, the third signal, and the fourth signal described in the following embodiments are all described by using SS/PBCH blocks as an example. Certainly, this is not limited in this application, and other signals may be alternatively used.

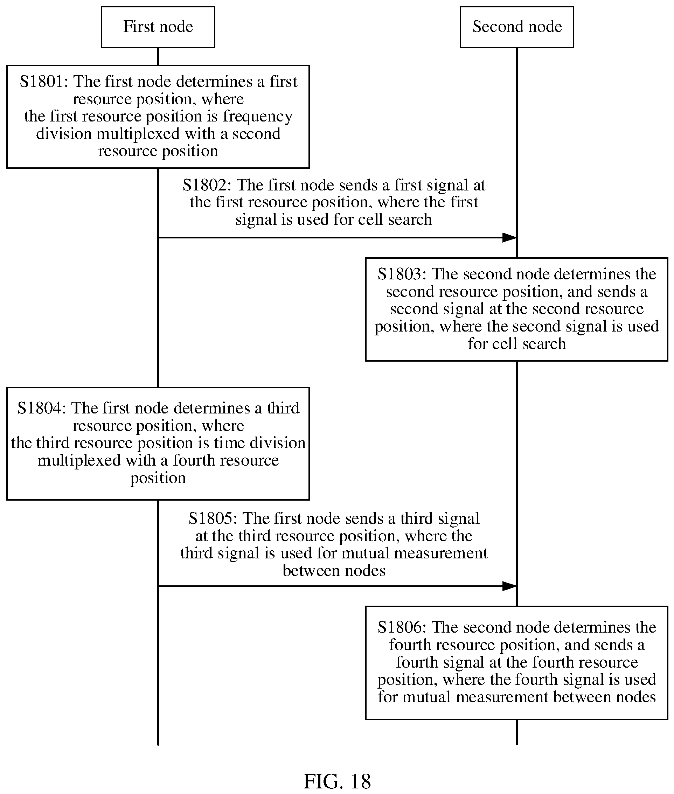

FIG. 18 is a schematic flowchart of another communication method according to an embodiment of this application. For example, the method may include the following steps.

S1801: A first node determines a first resource position.

As described in the background, an SS/PBCH block may be used for cell search, measurement for mobility management, and the like. In this embodiment, SS/PBCH blocks may be classified into two types: One type is used for cell search, and the other type is used for inter-node mutual discovery or measurement (inter-node discovery and measurements). Inter-node mutual measurement is used for description below, and may be replaced with inter-node mutual discovery, or inter-node mutual discovery and measurement.

The first node sends an SS/PBCH block at the first resource position for cell search of UE served by the first node, and a second node sends an SS/PBCH block at a second resource position for cell search of UE served by the second node. When a node sends an SS/PBCH block for cell search, a problem that nodes cannot measure each other does not need to be considered. Therefore, the first resource position and the second resource position may be frequency division multiplexed.

When the first resource position and the second resource position are frequency division multiplexed, for resource position determining, refer to the descriptions in the embodiment shown in FIG. 11. Details are not described herein again. However, a difference from the embodiment shown in FIG. 11 lies in that a problem of changing different node combinations in time domain does not need to be considered between nodes. A time domain position of the first resource position is the same as that of the second resource position. S1802: The first node sends a first signal at the first resource position.

The first signal is used for cell search. The UE served by the first node receives the first signal, and completes cell search.

S1803: The second node determines the second resource position, and sends a second signal at the second resource position.

The second signal is used for cell search. The UE served by the second node receives the second signal, and completes cell search.

S1804: The first node determines a third resource position.

The first node may further send an SS/PBCH block, to implement mutual measurement between nodes.

For example, in this embodiment, the second node may be a next-hop node of the first node, and the second node may receive the SS/PBCH block sent by the first node and perform measurement. Therefore, time division multiplexing may be performed between the third resource position and a fourth resource position, the fourth resource position is used by the second node to send a fourth signal, the third resource position is associated with an identifier of the first node, and the fourth resource position is associated with an identifier of the second node.

An identifier of a node, for example, the identifier of the first node or the second node, may be a node identifier or a physical cell identifier (physical cell identifier, PCI).

When the third resource position and the fourth resource position are time division multiplexed, for resource position determining, refer to the descriptions of the embodiments or examples shown in FIG. 7 to FIG. 10. Details are not described herein again.

S1805: The first node sends a third signal at the third resource position.

S1806: The second node determines the fourth resource position, and sends the fourth signal at the fourth resource position.

For an SS/PBCH block used for cell search, that is, an SSB, a half frame offset of the SSB may be based on an identifier of a node, a quantity *N_{f,cell}* of nodes supporting orthogonality in frequency domain, and a quantity *L*₁ of SSBs used for cell search in each half frame, that is, may be associated with the identifier of the node, the quantity *N_{f,cell}* of nodes supporting orthogonality in frequency domain, and the quantity *L*₁ of SSBs used for cell search in each half frame, or may be a function of the identifier of the node, the quantity *N_{f,cell}* of nodes supporting orthogonality in frequency domain, and the quantity *L*₁ of SSBs used for cell search in each half frame. For example, the half frame offset of the SSB may be expressed as $\left⌊PCI/\left({N}_{f , cell}\times {L}_{1}\right)\right⌋$. An SSB index may be based on the identifier of the node, the quantity *N_{f,cell}* of nodes supporting orthogonality in frequency domain, and the quantity *L*₁ of SSBs used for cell search in each half frame, that is, may be associated with the identifier of the node, the quantity *N_{f,cell}* of nodes supporting orthogonality in frequency domain, and the quantity *L*₁ of SSBs used for cell search in each half frame, or may be a function of the identifier of the node, the quantity *N_{f ,cell}* of nodes supporting orthogonality in frequency domain, and the quantity *L*₁ of SSBs used for cell search in each half frame. For example, the SSB index may be expressed as $\left⌊PCI%\left({N}_{f , cell}\times {L}_{1}\right)/{N}_{f , cell}\right⌋ \times 2$ . A center frequency position of the SSB may be based on a cell identifier, for example, may be expressed as PCI%*N_{f,cell}.*

For an SSB used for mutual measurement between nodes, a half frame offset of the SSB may be based on an identifier of a node, a quantity *L*₁ of SSBs used for cell search in each half frame, and a quantity *Lₘₐₓ* of candidate SSBs in each half frame, that is, may be associated with the identifier of the node, the quantity *L*₁ of SSBs used for cell search in each half frame, and the quantity *Lₘₐₓ* of candidate SSBs in each half frame, or may be a function of the identifier of the node, the quantity *L*₁ of SSBs used for cell search in each half frame, and the quantity *Lₘₐₓ* of candidate SSBs in each half frame. For example, the half frame offset of the SSB may be expressed as $\left⌊PCI/\left({L}_{max}-{L}_{1}\right)\right⌋$. An SSB index may be based on the identifier of the node, the quantity *L*₁ of SSBs used for cell search in each half frame, and the quantity *Lₘₐₓ* of candidate SSBs in each half frame, that is, may be associated with the identifier of the node, the quantity *L*₁ of SSBs used for cell search in each half frame, and the quantity *Lₘₐₓ* of candidate SSBs in each half frame, or may be a function of the identifier of the node, the quantity *L*₁ of SSBs used for cell search in each half frame, and the quantity *Lₘₐₓ* of candidate SSBs in each half frame. For example, the SSB index may be expressed as *PCI%*(*Lₘₐₓ - L*₁) *+* 1 or $\left⌊PCI%\left({L}_{max}-{L}_{1}\right)\right⌋ \times 2 + 1$.

For example, *Lₘₐₓ* is determined based on a time domain position of the SS/PBCH block defined in a protocol, a subframe format configured in a current system, or an uplink-downlink configuration configured in a current system; or is a predefined or configured value.

The following further describes the solution of this embodiment in detail by using several examples.

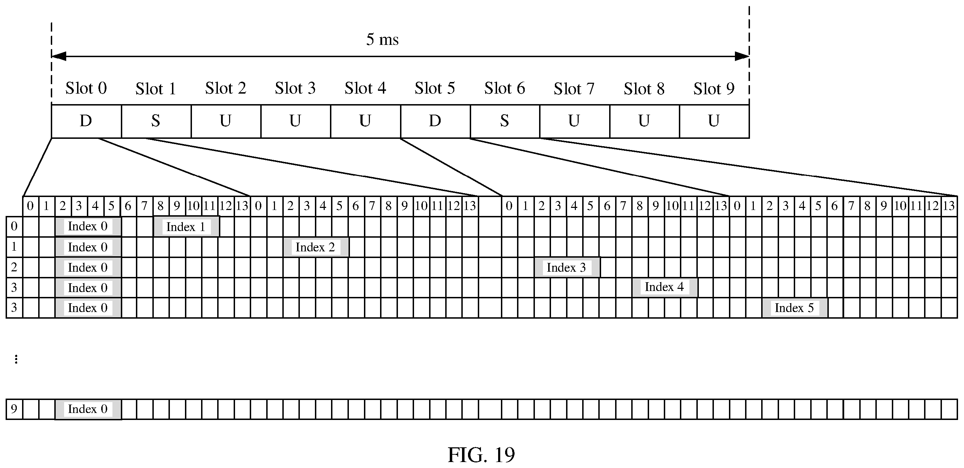

FIG. 19 is a diagram of an example in which SS/PBCH blocks are sent in a time division orthogonal manner according to an embodiment of this application. Each SS/PBCH block occupies a frequency domain resource of 20 RBs. Using a 100M system bandwidth and a 30 kHz SCS as an example, frequency division orthogonal sending of SS/PBCH blocks of a maximum of 13 nodes is supported in the system bandwidth. In time domain, it is assumed that a current system is an operator spectrum, but a specification for a position of an SS/PBCH block on a non-operator spectrum in a protocol can be used. Using a 30 kHz SCS as an example, a position of a first symbol in a candidate position of an SS/PBCH block within every 5 ms is {2,8} + 14 · *n. n* = 0, 1, 2, 3, 4, 5, 6, 7, 8, 9. If the current system is the operator spectrum, the SS/PBCH block may be sent at the foregoing position. Similarly, a D slot supports two SS/PBCH blocks, and an S slot supports one SS/PBCH block. For a TDD slot configuration 2:3, there are a maximum of six SS/PBCH block candidate positions within 5 ms.

Within 5 ms, 10 nodes (a node 0 to a node 9) each can send an SS/PBCH block once for cell search. For example, an SS/PBCH block sent by the node 0 is at a position of *f*₀ in frequency domain and an SSB index 0 in time domain, an SS/PBCH block sent by the node 1 is at a position of *f*₁ in frequency domain and an SSB index 0 in time domain, and by analogy, an SS/PBCH block sent by the node 9 is at a position of *f*₉ in frequency domain and an SSB index 0 in time domain. Therefore, a period of the SS/PBCH block used for cell search is 5 ms, an offset of a half frame in which a node resource position is located in the period of the SS/PBCH block is $\left⌊PCI/\left(10\times 1\right)\right⌋$, an index of the SS/PBCH block in the half frame is $\left⌊PCI%\left(10\times 1\right)/10\right⌋$, and a center frequency position of each SS/PBCH block is PCI%10.

Within 5 ms, a quantity of candidate positions of the SS/PBCH block in the half frame that is determined based on a time domain position of the SS/PBCH block defined in a protocol, a subframe format configured in a current system, or an uplink-downlink configuration configured in a current system is 6, that is, *Lₘₐₓ* = 6. In this case, five nodes, that is, *Lₘₐₓ* - *L*₁ = 6 - 1 = 5, each are supported to send an SS/PBCH block once for mutual measurement between nodes, and a period of mutual measurement between 10 nodes is supported to be 10 ms. That is, the period of the SS/PBCH block is configured to be 10 ms, including two half frames. Within the 10 ms, time-frequency domain positions for sending SS/PBCH blocks by the nodes are staggered based on identifiers of the nodes: The offset of the half frame in which the node resource position is located in the period of the SS/PBCH block is $\left⌊PCI/\left(6-1\right)\right⌋$; the index of the SS/PBCH block in the half frame is *PCI*%*(6-1)* + 1; and a center frequency position of each SS/PBCH block is the same. Therefore, mutual measurement between 10 nodes can be supported. Specifically, the node 0, the node 1, ..., and the node 4 respectively send SS/PBCH blocks at a position of the SSB index 1, a position of the SSB index 2, ..., and a position of the SSB index 5 in the 0^{th} half frame; and the node 5, the node 6, ..., and the node 9 respectively send SS/PBCH blocks at a position of the SSB index 1, a position of the SSB index 2, ..., and a position of the SSB index 5 in the 1^{st} half frame.

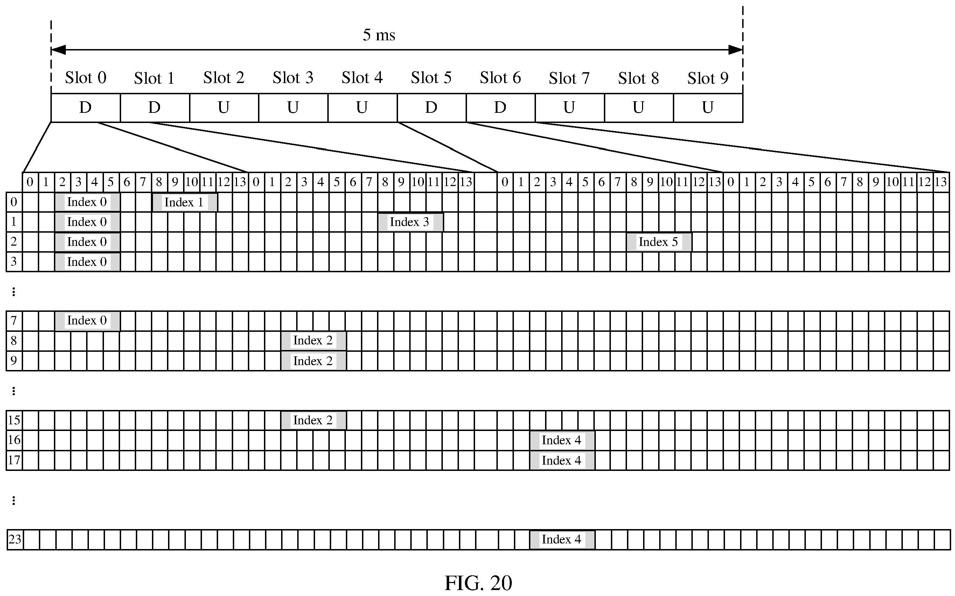

To support large-scale node networking, FIG. 20 is a diagram of an example in which SS/PBCH blocks are sent in a time-frequency orthogonal manner according to an embodiment of this application. In this example, a 30 kHz SCS is used, and a position of a first symbol in a candidate position of an SS/PBCH block within every 5 ms is {2,8} + 14 · *n*. *n* = 0, 1, 2, 3, 4, 5, 6, 7, 8, 9. Within 5 ms, 24 nodes (a node 0 to a node 23) each can send an SS/PBCH block once for cell search. For example, an SS/PBCH block sent by the node 0 is at a position of f₀ in frequency domain and an SSB index 0 in time domain; an SS/PBCH block sent by the node 1 is at a position of *f*₁ in frequency domain and an SSB index 0 in time domain; by analogy, an SS/PBCH block sent by the node 7 is at a position of *f*₇ in frequency domain and an SSB index 0 in time domain; an SS/PBCH block sent by the node 8 is at a position of *f*₀ in frequency domain and an SSB index 2 in time domain; an SS/PBCH block sent by the node 9 is at a position of *f*₁ in frequency domain and an SSB index 2 in time domain; by analogy, an SS/PBCH block sent by the node 15 is at a position of *f*₇ in frequency domain and an SSB index 2 in time domain; an SS/PBCH block sent by the node 16 is at a position of *f*₀ in frequency domain and an SSB index 4 in time domain; an SS/PBCH block sent by the node 17 is at a position of *f*₁ in frequency domain and an SSB index 4 in time domain; and by analogy, an SS/PBCH block sent by the node 23 is at a position of *f*₇ in frequency domain and an SSB index 4 in time domain.

Within 5 ms, if a quantity of candidate positions of the SS/PBCH block in the half frame that is determined based on a configuration is 6, that is, *Lₘₐₓ* = 6, three nodes, that is, *Lₘₐₓ* - *L*₁ = 6 - 3 = 3, each are supported to send an SS/PBCH block once for mutual measurement between nodes.

If a maximum quantity of nodes in a network is 96, the 96 nodes each can send an SS/PBCH block once within 20 ms for cell search. An offset of a half frame in which a node resource position is located in a period of the SS/PBCH block is $\left⌊PCI/\left(8\times 3\right)\right⌋$, that is, four half frames are required for the 96 nodes to each send an SS/PBCH block once for cell search, and each half frame may support 24 nodes to each send an SS/PBCH block once for cell search. An index of the SS/PBCH block in the half frame is $\left⌊PCI%\left(8\times 3\right)/8\right⌋ \times 2$, and a center frequency position of each SS/PBCH block is PCI%8.

Within 160 ms, 96 nodes each can send an SS/PBCH block once for mutual measurement between nodes, and a period of mutual measurement between the 96 nodes is supported to be 160 ms. That is, the period of the SS/PBCH block is configured to be 160 ms, including 32 half frames. Within the 160 ms, time-frequency domain positions for sending SS/PBCH blocks by the nodes are staggered based on identifiers of the nodes: The offset of the half frame in which the node resource position is located in the period of the SS/PBCH block is $\left⌊PCI/\left(6-3\right)\right⌋$; the index of the SS/PBCH block in the half frame is (*PCI*%*(6-3)*) × 2 +*1*; and a center frequency position of each SS/PBCH block is the same. Therefore, mutual measurement between 160 nodes can be supported. Specifically, the node 0, the node 1, and the node 2 respectively send SS/PBCH blocks at a position of the SSB index 1, a position of the SSB index 3, and a position of the SSB index 5 in the 0^{th} half frame; the node 3, the node 4, and the node 5 respectively send SS/PBCH blocks at a position of the SSB index 1, a position of the SSB index 3, and a position of the SSB index 5 in the 1^{st} half frame; and by analogy, the node 93, the node 94, and the node 95 respectively send SS/PBCH blocks at a position of the SSB index 1, a position of the SSB index 3, and a position of the SSB index 5 in the 31^{st} half frame.

According to the communication method provided in this embodiment of this application, SS/PBCH blocks are sent in a frequency division orthogonal manner between a plurality of nodes for cell search, so that resource utilization is improved. SS/PBCH blocks are sent in a time division orthogonal manner between a plurality of nodes for mutual measurement between the nodes, so that signal interference from a neighboring cell can be avoided during SS/PBCH block measurement, and a delay of multi-node measurement can be reduced.

In this application, "sending information to ... (for example, the first node)" or a related illustration in the accompanying drawings may be understood as that a destination end of the information is the first node, and may include directly or indirectly sending the information to the first node. "Receiving, from ... (for example, the first node), information" or "receiving information from ... (for example, the first node)" or a related illustration in the accompanying drawings may be understood as that a source end of the information is the first node, and may include directly or indirectly receiving the information from the first node. Information may undergo necessary processing, for example, a format change, between a source end and a destination end of information sending. However, the destination end can understand valid information from the source end. Similar expressions in this application may be understood similarly. Details are not described herein again.

The foregoing describes in detail the communication method provided in embodiments of this application. It may be understood that this application is described by using an example in which a first node and a second node are used as execution bodies of the interaction illustration. However, the execution bodies of the interaction illustration are not limited in this application. For example, the first node in the method provided in this application may alternatively be a chip, a chip system, or a processor used in the first node, or may be a logical node, a logical module, or software that can implement all or some functions of the first node. The second node in the method provided in this application may alternatively be a chip, a chip system, or a processor used in the second node, or may be a logical node, a logical module, or software that can implement all or some functions of the second node.

It may be understood that, in the foregoing embodiments, the method and/or step implemented by the first node may be implemented by a component (such as a chip or a circuit) that can be used in the first node, and the method and/or step implemented by the second node may be implemented by a component (such as a chip or a circuit) that can be used in the second node.

The foregoing mainly describes the solutions provided in embodiments of this application from a perspective of interaction between nodes. Correspondingly, an embodiment of this application further provides a communication apparatus, and the communication apparatus is configured to implement the foregoing methods. The communication apparatus may be the first node in the foregoing method embodiments, or may be a component that can be used in the first node; or the communication apparatus may be the second node in the foregoing method embodiments, or may be a component that can be used in the second node. It may be understood that, to implement the foregoing functions, the communication apparatus includes a corresponding hardware structure and/or software module for performing the functions. A person skilled in the art should be easily aware that, with reference to the example units and algorithm steps described in the embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module corresponding to each function may be obtained through division, or two or more functions may be integrated into one processing unit. The integrated module may be implemented in a form of hardware, or may be implemented in a form of a software functional module. It should be noted that division into the modules in embodiments of this application is an example, and is merely logical function division. In actual implementation, there may be another division manner.

Based on the same concept of the foregoing communication method, this application further provides the following communication apparatus.

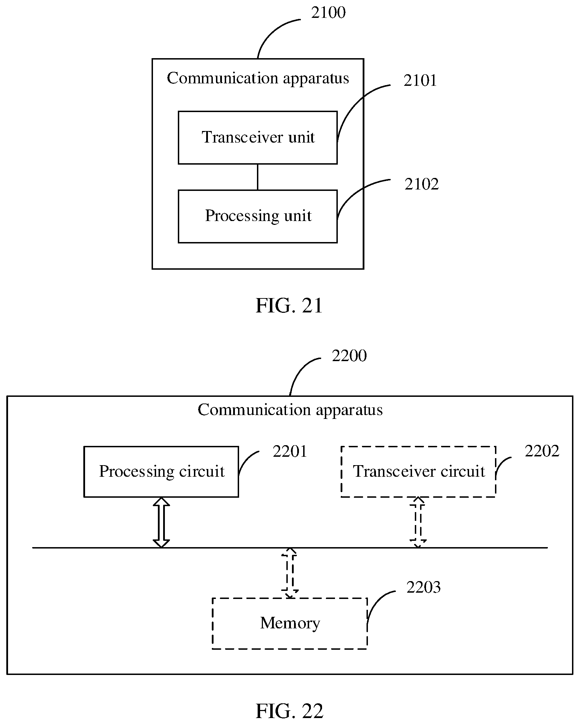

FIG. 21 is a diagram of a structure of a communication apparatus according to an embodiment of this application. The communication apparatus 2100 includes a transceiver unit 2101 and a processing unit 2102.

When the communication apparatus is configured to implement the function of the first node in the foregoing method embodiments, the processing unit 2102 is configured to perform the operation of S701 in the embodiment shown in FIG. 7, and the transceiver unit 2101 is configured to perform the operation of the first node in S702 in the embodiment shown in FIG. 7. Alternatively, the processing unit 2102 is configured to perform the operation of the first node in S1101 in the embodiment shown in FIG. 11, and the transceiver unit 2101 is configured to perform the operation of the first node in S1102 in the embodiment shown in FIG. 11. Alternatively, the processing unit 2102 is configured to perform the operations in S1801 and S1804 in the embodiment shown in FIG. 18, and the transceiver unit 2101 is configured to perform the operations of the first node in S1802 and S1805 in the embodiment shown in FIG. 18.

When the communication apparatus is configured to implement the function of the second node in the foregoing method embodiments, the transceiver unit 2101 is configured to perform the operation of the second node in S702 in the embodiment shown in FIG. 7, and the processing unit 2102 is configured to perform the operation in S703 in the embodiment shown in FIG. 7. Alternatively, the processing unit 2102 is configured to perform the operation in S1103 in the embodiment shown in FIG. 11. Alternatively, the processing unit 2102 is configured to perform the processing operations of the second node in S1803 and S1806 in the embodiment shown in FIG. 18, and the transceiver unit 2101 is configured to perform the receiving operations of the second node in S1802 and S1805 and the sending operations of the second node in S1803 and S1806 in the embodiment shown in FIG. 18.

For specific implementations of the transceiver unit 2101 and the processing unit 2102, refer to the descriptions in the foregoing method embodiments.

FIG. 22 is a diagram of a structure of another communication apparatus according to an embodiment of this application. The communication apparatus 2200 includes a processing circuit 2201. The processing circuit 2201 includes one or more processors, or a processing part in one or more processors. The processing circuit is configured to perform the processing operation of the first node or the second node in the foregoing method embodiments.

Optionally, the communication apparatus 2200 may further include a memory 2203 (represented by a dashed line in the figure). The memory 2203 is configured to store instructions executed by the processing circuit 2201, or store input data required for running instructions by the processing circuit 2201, or store data generated after the processing circuit 2201 runs instructions. The memory 2203 may be located inside the processing circuit, or may be located outside the processing circuit.

Optionally, the communication apparatus 2200 may further include a transceiver circuit 2202 (represented by a dashed line in the figure), and the processing circuit 2201 and the transceiver circuit 2202 are coupled to each other. It may be understood that the transceiver circuit 2202 may be a transceiver, for example, when the transceiver circuit 2202 is located in a communication device such as a network device; or may be an interface circuit, for example, when the transceiver circuit 2202 is located in a chip or a module used in a communication device. The processing circuit 2201 is configured to implement the function of the processing unit 2102 in the embodiment shown in FIG. 21, and the transceiver circuit 2202 is configured to implement the function of the transceiver unit 2101 in the embodiment shown in FIG. 21.

When the communication apparatus is a chip used in a first node, the chip implements the function of the first node in the foregoing method embodiments. The chip receives information from another module (for example, a radio frequency module or an antenna) in the first node, where the information is sent by a second node to the first node. Alternatively, the chip sends information to another module (for example, a radio frequency module or an antenna) in the first node, where the information is sent by the first node to a second node.

When the communication apparatus is a chip used in a second node, the chip implements the function of the second node in the foregoing method embodiments. The chip receives information from another module (for example, a radio frequency module or an antenna) in the second node, where the information is sent by a first node to the second node. Alternatively, the chip sends information to another module (for example, a radio frequency module or an antenna) in the second node, where the information is sent by the second node to a first node.

In addition, it should be noted that, the transceiver unit and/or the processing unit may be implemented by using a virtual module. For example, the processing unit may be implemented by using a software functional unit or a virtual apparatus, and the transceiver unit may be implemented by using a software function or a virtual apparatus. Alternatively, the processing unit or the transceiver unit may be implemented by using a physical apparatus. For example, if the apparatus is implemented by using a chip/chip circuit, the transceiver unit may be an input/output circuit and/or a communication interface, and performs an input operation (corresponding to the foregoing receiving operation) and an output operation (corresponding to the foregoing sending operation). The processing unit is an integrated processor, a microprocessor, or an integrated circuit.

In this application, division into the modules is an example, and is merely logical function division. During actual implementation, there may be another division manner. In addition, functional modules in examples of this application may be integrated into one processor, each of the modules may exist alone physically, or two or more modules may be integrated into one module. The integrated module may be implemented in a form of hardware, or may be implemented in a form of a software functional module.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor or the like.

An embodiment of this application further provides a computer-readable storage medium. The computer-readable storage medium stores a computer program or instructions. When the computer program or the instructions are executed, the method in the foregoing embodiments is implemented.

An embodiment of this application further provides a computer program product including instructions. When the instructions are run on a computer, the computer is enabled to perform the method in the foregoing embodiments.

An embodiment of this application further provides a communication system, including the foregoing communication apparatus.

An embodiment of this application further provides a circuit. The circuit is coupled to a memory, and the circuit is configured to perform the method shown in the foregoing embodiments. The circuit may include a chip circuit.

When the communication apparatus is a module used in a base station, the module in the base station implements a function of the base station in the foregoing method embodiments. The module in the base station receives information from another module (for example, a radio frequency module or an antenna) in the base station, where the information is sent by a first node to the base station; or the module in the base station sends information to another module (for example, a radio frequency module or an antenna) in the base station, where the information is sent by the base station to a first node. The module in the base station herein may be a baseband chip of the base station, or may be a CU, a DU, or another module, or may be an apparatus in an open radio access network (open radio access network, O-RAN) architecture, for example, an apparatus like an open CU or an open DU.

It should be noted that one or more of the foregoing elements or units may be implemented by using software, hardware, or a combination thereof. When any one of the foregoing elements or units is implemented by using software, the software exists in a form of computer program instructions, and is stored in the memory. The processor may be configured to execute the program instructions and implement the foregoing method procedure.

In this application, the processor may be a general-purpose processor, a digital signal processor, an application-specific integrated circuit, a field programmable gate array or another programmable logic device, a discrete gate or a transistor logic device, a discrete hardware component, or all or a part of circuits in the foregoing device that are configured to implement a processing function, and may implement or perform the methods, steps, and logical block diagrams disclosed in this application. The general-purpose processor may be a microprocessor, or may be any conventional processor or the like. The steps of the method disclosed with reference to this application may be directly performed by a hardware processor, or may be performed by a combination of hardware and software modules in the processor.

When the foregoing element or unit is implemented by hardware, the hardware may be any one or any combination of a CPU, a general-purpose processor (general process unit, GPU), a microprocessor, a digital signal processing (digital signal processing, DSP) chip, a microcontroller unit (microcontroller unit, MCU), an artificial intelligence processor, an ASIC, a system on a chip (system on a chip, SoC), an FPGA, a programmable logic device (programmable logic device, PLD), a dedicated digital circuit, a hardware accelerator, or a non-integrated discrete component. The hardware may run necessary software or may not rely on software to perform the foregoing method procedure.

Optionally, an embodiment of this application further provides a chip system, including at least one processor and an interface. The at least one processor is coupled to a memory through the interface. When the at least one processor executes a computer program or instructions in the memory, the chip system is enabled to perform the method in any one of the foregoing method embodiments. Optionally, the chip system may include a chip, or may include a chip and another discrete component. This is not specifically limited in embodiments of this application.

The memory in this application may alternatively be a circuit or any other apparatus that can implement a storage function, and is configured to store program instructions and/or data. The memory is any other medium that can carry or store expected program code in a form of an instruction or a data structure and that can be accessed by a computer, but is not limited thereto. For example, the memory may be a non-volatile memory, for example, a digital versatile disc (digital versatile disc, DVD), a hard disk drive (hard disk drive, HDD), or a solid-state drive (solid-state drive, SSD), or may be a volatile memory (volatile memory), for example, a random access memory (random access memory, RAM).

It should be understood that unless otherwise specified, "/" in descriptions of this application indicates an "or" relationship between associated objects. For example, A/B may indicate A or B. A and B may be singular or plural. In addition, in the descriptions of this application, unless otherwise specified, "a plurality of" means two or more. "At least one of the following items (pieces)" or a similar expression thereof means any combination of these items, including a single item (piece) or any combination of a plurality of items (pieces). For example, at least one item (piece) of a, b, or c may represent a, b, c, a and b, a and c, b and c, or a, b, and c, where a, b, and c may be singular or plural. In addition, for ease of clearly describing the technical solutions in embodiments of this application, the words such as "first" and "second" are used to distinguish between same or similar items whose functions are basically the same in embodiments of this application. A person skilled in the art may understand that the words such as "first" and "second" do not limit a quantity or an execution order, and the words such as "first" and "second" do not necessarily indicate a specific difference. In addition, in embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present a related concept in a specific manner for ease of understanding.

All or some of the foregoing embodiments may be implemented by software, hardware, firmware, or any combination thereof. When a software program is used to implement the embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner.

Although this application is described with reference to embodiments, in a process of implementing this application that claims protection, a person skilled in the art may understand and implement another variation of the disclosed embodiments by viewing the accompanying drawings, disclosed content, and appended claims. In the claims, the word "comprise" (comprising) does not exclude another component or step, and "a" or "one" does not exclude a meaning of plurality. A single processor or another unit may implement several functions enumerated in the claims. Some measures are recorded in dependent claims that are different from each other, but this does not indicate that these measures cannot be combined to produce a better effect.

It may be understood that various numbers in embodiments of this application are merely used for differentiation for ease of description, and are not used to limit the scope of embodiments of this application. Sequence numbers of the foregoing processes do not mean a sequence of execution. The sequence of execution of the processes should be determined according to functions and internal logic of the processes.

In the foregoing embodiments, descriptions of the embodiments have respective focuses. For a part that is not described in detail in an embodiment, refer to related descriptions in other embodiments.

Components in the apparatus in embodiments of this application may be combined, divided, and deleted based on an actual requirement. A person skilled in the art may combine different embodiments or features of different embodiments described in this specification.

In this application, on the premise that there is no logic contradiction, the examples can be referenced from each other. For example, methods and/or terms in the method embodiments can be referenced from each other, functions and/or terms in the apparatus embodiments can be referenced from each other, and functions and/or terms in the apparatus examples and the method examples can be referenced from each other.

## Claims

1. A communication method, performed by a first node or a chip or a circuit used in the first node, wherein the method comprises:
determining a first resource position for the first node to send a first signal, wherein the first resource position and a second resource position are time division multiplexed and/or frequency division multiplexed, the second resource position is used by a second node to send a second signal, the first resource position is associated with an identifier of the first node, and the second resource position is associated with an identifier of the second node; and
sending the first signal at the first resource position.

2. The method according to claim 1, wherein the second resource position and the first resource position are time division multiplexed, and the first signal and the second signal are used for cell search.

3. The method according to claim 1 or 2, wherein the second resource position and the first resource position are time division multiplexed, and the method further comprises: receiving the second signal at the second resource position.

4. The method according to claim 1, wherein the second resource position and the first resource position are frequency division multiplexed, the first signal and the second signal are used for cell search, and the method further comprises:
sending a third signal at a third resource position, wherein the third signal is used by the first node and the second node to measure each other, the third resource position and a fourth resource position are time division multiplexed, the fourth resource position is used by the second node to send a fourth signal, the third resource position is associated with the identifier of the first node, and the fourth resource position is associated with the identifier of the second node.

5. A communication method, performed by a second node or a chip or a circuit used in the second node, wherein the method comprises:
determining a second resource position for the second node to send a second signal, wherein the second resource position and a first resource position are time division multiplexed, the first resource position is used by a first node to send a first signal, the first resource position and the second resource position are located in a half frame, the first resource position is associated with an identifier of the first node, and the second resource position is associated with an identifier of the second node;
receiving the first signal at the first resource position; and
sending the second signal at the second resource position.

6. The method according to claim 5, wherein the second resource position and the first resource position are time division multiplexed, and the first signal and the second signal are used for cell search.

7. A communication method, performed by a second node or a chip or a circuit used in the second node, wherein the method comprises:
determining a second resource position for the second node to send a second signal, wherein the second resource position and a first resource position are frequency division multiplexed, the first resource position is used by a first node to send a first signal, the first resource position is associated with an identifier of the first node, and the second resource position is associated with an identifier of the second node; and
sending the second signal at the second resource position.

8. The method according to claim 7, wherein the second resource position and the first resource position are time division multiplexed, and the first signal and the second signal are used for cell search.

9. The method according to any one of claims 1 to 8, wherein the second resource position and the first resource position are frequency division multiplexed, and the first signal and the second signal are used for cell search and mutual measurement between nodes.

10. The method according to any one of claims 1 to 9, wherein the first resource position is associated with an offset of the half frame in which the first resource position is located in a period of the first signal and an index of the first signal in the half frame, and the period comprises at least one half frame.

11. The method according to claim 10, wherein the first resource position and the second resource position are time division multiplexed, and the offset of the half frame in which the first resource position is located in the period of the first signal is associated with the identifier of the first node and a quantity of candidate positions of the first signal in the half frame; and
the index of the first signal in the half frame is associated with the identifier of the first node and the quantity of candidate positions of the first signal in the half frame.

12. The method according to claim 11, wherein the offset of the half frame in which the first resource position is located in the period of the first signal, the identifier of the first node, and the quantity of candidate positions of the first signal in the half frame satisfy a first function relationship; and
the index of the first signal in the half frame, the identifier of the first node, and the quantity of candidate positions of the first signal in the half frame satisfy a second function relationship.

13. The method according to claim 11 or 12, wherein the offset of the half frame in which the first resource position is located in the period of the first signal is equal to $\left⌊identifier of the first node/{L}_{max}\right⌋$ or $\left⌊\left(identifier of the first node+m\right)/{L}_{max}\right⌋$, wherein *Lₘₐₓ* is the quantity of candidate positions of the first signal in the half frame, / represents division, and └ ┘ represents rounding down; and
the index of the first signal in the half frame is equal to identifier of the first node%*Lₘₐₓ* or (identifier of the first node+m)%*Lₘₐₓ*, wherein % represents a modulo operation, wherein
m is a natural number or an integer.

14. The method according to any one of claims 1 to 8, wherein the first resource position and the second resource position are frequency division multiplexed, and an offset of the half frame in which the first resource position is located in a period of the first signal is associated with the identifier of the first node, a first parameter, a second parameter, a quantity of times that the currently sent first signal has been repeatedly sent in the period, and a quantity of candidate positions of the first signal in the half frame; and
an index of the first signal in the half frame is associated with the identifier of the first node, the first parameter, the second parameter, the quantity of times that the currently sent first signal has been repeatedly sent in the period, and the quantity of candidate positions of the first signal in the half frame, wherein
the first parameter is predefined, or is configured, or is based on a predefined or configured third parameter, and the third parameter is identifiers of a plurality of nodes; and
the second parameter is predefined, or is configured, or is based on a predefined or configured fourth parameter, and the fourth parameter is a system bandwidth.

15. The method according to claim 14, wherein the offset of the half frame in which the first resource position is located in the period of the first signal, the identifier of the first node, the first parameter, the second parameter, the quantity of times that the currently sent first signal has been repeatedly sent in the period, and the quantity of candidate positions of the first signal in the half frame satisfy a third function relationship; and
the index of the first signal in the half frame, the identifier of the first node, the first parameter, the second parameter, the quantity of times that the currently sent first signal has been repeatedly sent in the period, and the quantity of candidate positions of the first signal in the half frame satisfy a fourth function relationship.

16. The method according to claim 14 or 15, wherein the offset of the half frame in which the first resource position is located in the period of the first signal is equal to $\left|\left[\left(identifier of the first node+r-1\right){%N}_{cell}+\left(r-1\right)\times \left⌈{N}_{cell}/{N}_{f , cell}\right⌉\times {N}_{f , cell}\right]/\right.$ $\left({N}_{f , cell}\times {L}_{max}\right) or \left[\left(identifier of the first node+m+r-1\right){%N}_{cell}+\left(r-\right.\right.$ $\left.\left.1\right)\times \left⌈{N}_{cell}/{N}_{f , cell}\right⌉\times {N}_{f , cell}\right] / \left({N}_{f , cell}\times {L}_{max}\right)$; and
the index of the first signal in the half frame is equal to $\left[\left(identifier of the first node+\right.\right.$ $\left.\left.r-1\right){%N}_{cell}+\left(r-1\right)\times \left⌈{N}_{cell}/{N}_{f , cell}\right⌉\times {N}_{f , cell}\right] / {N}_{f , cell} {%L}_{max}$ or $\left[\left(identifier of the first node+m+r-1\right){%N}_{cell}+\left(r-1\right)\times \left⌈{N}_{cell}/{N}_{f , cell}\right⌉\times {N}_{f , cell}\right] /$ ${N}_{f , cell} {%L}_{max}$, wherein
r is the quantity of times that the currently sent first signal has been repeatedly sent in the period, *N_{cell}* is a total quantity of nodes, *N_{f,cell}* is a quantity of nodes that support orthogonality in frequency domain, *Lₘₐₓ* is the quantity of candidate positions of the first signal in the half frame, m is a natural number or an integer, / represents division, └ ┘ represents rounding down, ┌ ┐ represents rounding up, and % represents a modulo operation.

17. The method according to any one of claims 14 to 16, wherein in different half frames in the period, at least one different second node exists in a plurality of second nodes that perform frequency division multiplexing with the first node.

18. The method according to any one of claims 1 to 17, wherein the quantity of candidate positions of the first signal in the half frame is associated with at least one of a carrier frequency and a subcarrier spacing, or is predefined or configured.

19. The method according to any one of claims 1 to 18, wherein an index of a first symbol in the candidate position of the first signal in the half frame is at least one of the following indexes: {2, 6, 10}+14*n, wherein
when a subcarrier spacing corresponding to the first signal is 15 kHz, n=0, 1, 2, 3, 4;
when a subcarrier spacing corresponding to the first signal is 30 kHz, n=0, 1, 2, 3, 4, 5, 6, 7, 8, 9;
when a subcarrier spacing corresponding to the first signal is 60 kHz, n=0, 1, 2, 3, 4, 5, 6, 7, 8, 9, 10, 11, 12, 13, 14, 15, 16, 17, 18, 19;
when a subcarrier spacing corresponding to the first signal is 120 kHz, n=0, 1, 2, 3, 4, ..., 39;
when a subcarrier spacing corresponding to the first signal is 240 kHz, n=0, 1, 2, 3, 4, ..., 79;
when a subcarrier spacing corresponding to the first signal is 480 kHz, n=0, 1, 2, 3, 4, ..., 159; or
when a subcarrier spacing corresponding to the first signal is 960 kHz, n=0, 1, 2, 3, 4, ..., 319.

20. The method according to any one of claims 1 to 18, wherein an index of a first symbol in the candidate position of the first signal in the half frame is at least one of the following indexes: {4}+4*n, wherein
when a subcarrier spacing corresponding to the first signal is 15 kHz, n=0, 1, 2, 3, 4, ..., 15;
when a subcarrier spacing corresponding to the first signal is 30 kHz, n=0, 1, 2, 3, 4, ..., 33;
when a subcarrier spacing corresponding to the first signal is 60 kHz, n=0, 1, 2, 3, 4, ..., 68;
when a subcarrier spacing corresponding to the first signal is 120 kHz, n=0, 1, 2, 3, 4, ..., 138;
when a subcarrier spacing corresponding to the first signal is 240 kHz, n=0, 1, 2, 3, 4, ..., 278;
when a subcarrier spacing corresponding to the first signal is 480 kHz, n=0, 1, 2, 3, 4, ..., 558; or
when a subcarrier spacing corresponding to the first signal is 960 kHz, n=0, 1, 2, 3, 4, ..., 1118.

21. The method according to any one of claims 1 to 18, wherein an index of a first symbol in the candidate position of the first signal in the half frame is at least one of the following indexes: {2}+4*n, wherein
when a subcarrier spacing corresponding to the first signal is 15 kHz, n=0, 1, 2, 3, 4, ..., 16;
when a subcarrier spacing corresponding to the first signal is 30 kHz, n=0, 1, 2, 3, 4, ..., 33;
when a subcarrier spacing corresponding to the first signal is 60 kHz, n=0, 1, 2, 3, 4, ..., 68;
when a subcarrier spacing corresponding to the first signal is 120 kHz, n=0, 1, 2, 3, 4, ..., 138;
when a subcarrier spacing corresponding to the first signal is 240 kHz, n=0, 1, 2, 3, 4, ..., 278;
when a subcarrier spacing corresponding to the first signal is 480 kHz, n=0, 1, 2, 3, 4, ..., 558; or
when a subcarrier spacing corresponding to the first signal is 960 kHz, n=0, 1, 2, 3, 4, ..., 1118.

22. A communication apparatus, wherein the apparatus comprises a module configured to perform the method according to any one of claims 1 to 21.

23. A communication apparatus, comprising a processor, configured to execute a program stored in a memory, wherein when the program is executed, the apparatus is enabled to perform the method according to any one of claims 1 to 21.

24. A computer-readable storage medium, wherein the computer-readable storage medium stores a computer program or instructions, and when the computer program or the instructions are executed by a computer, the method according to any one of claims 1 to 21 is implemented.

25. A computer program product, wherein when a computer reads and executes the computer program product, the computer is enabled to perform the method according to any one of claims 1 to 21.
